(19) **Europäisches Patentamt / European Patent Office / Office européen des brevets**

(11) **EP 4 336 297 A1**

(12) # EUROPEAN PATENT APPLICATION
published in accordance with Art. 153(4) EPC

(43) Date of publication:
**13.03.2024 Bulletin 2024/11**

(21) Application number: **21951354.6**

(22) Date of filing: **30.07.2021**

(51) International Patent Classification (IPC):
*G05D 1/02* (2020.01)     *B60W 60/00* (2020.01)

(52) Cooperative Patent Classification (CPC):
**B60W 60/00; G05D 1/02**

(86) International application number:
**PCT/CN2021/109640**

(87) International publication number:
**WO 2023/004759 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventor: **YANG, Qimo**
**Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **FAULT DETECTION METHOD, FAULT DETECTION APPARATUS, SERVER, AND VEHICLE**

(57)     This application provides a fault detection method, a fault detection apparatus, a server, and a vehicle. The method includes: A server obtains data collected by a sensor of a first device and a first control instruction. The server determines, based on the data collected by the sensor, whether there is a safety risk of executing the first control instruction by the first device. The server sends safety information to the first device. The safety information includes first indication information. The first indication information indicates whether there is a safety risk of executing the first control instruction by the first device. Embodiments of this application help improve accuracy of fault detection of an autonomous driving computing platform.

1100

First device — Server

S1101: Data collected by a sensor and first control instruction

S1102: Determine, based on the data collected by the sensor, whether there is a safety risk of executing the first control instruction by the first device

S1103: Safety information

FIG. 11

EP 4 336 297 A1

**Description**

**TECHNICAL FIELD**

This application relates to the field of intelligent driving, and more specifically, to a fault detection method, a fault detection apparatus, a server, and a vehicle.

**BACKGROUND**

Vehicles are the first choice for the public to travel, and safety is always the primary factor in a vehicle design. The public has a very low tolerance for an accident caused by a fault of the vehicle. With development of autonomous driving technologies, vehicle control is gradually transitioned from human to the vehicle. Currently, there is a solution in which a redundant output is implemented by deploying two sets of same and independent autonomous driving computing platforms and autonomous driving algorithms in the vehicle. The vehicle compares whether vehicle control instructions output by the two sets of computing platforms are consistent, to determine whether an autonomous driving computing platform is faulty. In this solution, two sets of software and hardware are used, which greatly increases hardware costs of the vehicle and an energy consumption requirement of autonomous driving. In addition, because the two sets of computing platforms use a same algorithm, a decision-making error caused by a disadvantage of the algorithm cannot be detected and avoided.

Therefore, how to improve accuracy of fault detection on the autonomous driving computing platform has become an urgent issue to be resolved during development of the autonomous driving technologies.

**SUMMARY**

This application provides a fault detection method, a fault detection apparatus, a server, and a vehicle, to improve accuracy of fault detection of an autonomous driving computing platform.

In this application, the "vehicle" may include one or more different types of transport vehicles, and may also include one or more different types of transportation tools or movable objects that operate or move on land (for example, a highway, a road, or a railway), water surface (for example, a waterway, a river, or an ocean), or in space. For example, the vehicle may include an automobile, a bicycle, a motorcycle, a train, a subway, an airplane, a boat, an aircraft, a robot, another type of transport vehicle, a movable object, or the like.

According to a first aspect, a fault detection method is provided. The method may be applied to a server. The method includes: The server obtains data collected by a sensor of a first device and a first control instruction. The server determines, based on the data collected by the sensor, whether there is a safety risk of executing the first control instruction by the first device.

The server sends safety information to the first device. The safety information includes first indication information, and the first indication information indicates whether there is a safety risk of executing the first control instruction by the first device.

In this embodiment of this application, the first device can upload the data collected by the sensor and the first control instruction that is considered safe by the first device to the server, and the server determines, based on the data collected by the sensor, whether there is a safety risk of executing the first control instruction. This helps reduce hardware costs of the first device (for example, the first device is a vehicle, and hardware and software costs of autonomous driving can be reduced), to reduce computational overheads and power consumption generated when the first device performs fault detection. In addition, a computing capability of the server is stronger than that of the first device, and the server stores more abundant resources and data than the first device. This helps improve accuracy of fault detection of the first device.

In some possible implementations, the first control instruction is determined by the first device based on the data collected by the sensor.

In some possible implementations, the first device may determine the first control instruction based on a first functional safety algorithm and the data collected by the sensor. The server may determine, based on a second functional safety algorithm and the data collected by the sensor, whether there is a safety risk of executing the first control instruction by the first device. The first functional safety algorithm and the second functional safety algorithm may be different algorithms.

In this embodiment of this application, the server and the first device may use different functional safety algorithms. This helps avoid a safety risk caused by a disadvantage of a single algorithm, and helps improve accuracy of fault detection of the first device.

In some possible implementations, the server and the first device are two different entities.

With reference to the first aspect, in some implementations of the first aspect, before the server determines whether there is a safety risk of executing the first control instruction by the first device, the method further includes: The server obtains information about first duration. That the server determines whether there is a safety risk of executing the first control instruction by the first device includes: The server determines whether there is a safety risk of executing the first control instruction by the first device within the first duration.

In this embodiment of this application, the server can determine whether there is a safety risk of executing the first control instruction by the first device within the first duration. This helps improve accuracy of fault detection of the first device.

In some possible implementations, that the server determines whether there is a safety risk of executing the first control instruction by the first device within the first duration includes: The server determines whether there is a safety risk of executing the first control instruction by the first device within the first duration starting from a time point at which the vehicle sends the first control instruction to the server.

In some possible implementations, that the server determines whether there is a safety risk of executing the first control instruction by the first device within the first duration includes: The server determines whether there is a safety risk of executing the first control instruction by the first device within the first duration starting from a time point at which the server receives the first control instruction.

In some possible implementations, the first duration may be preset, or may be obtained by the server from another device (for example, the first device or another server).

In some possible implementations, the first duration may be determined by the server based on a working scenario of the first device. For example, the first device is a vehicle. If the server determines that a scenario in which the vehicle currently travels is an urban road, the server may determine a value of the first duration as a first value. Alternatively, if the server determines that a scenario in which the vehicle currently travels is a highway, the server may determine a value of the first duration as a second value.

With reference to the first aspect, in some implementations of the first aspect, the first duration is determined based on a communication delay between the first device and the server and a speed of the first device.

In this embodiment of this application, the first duration may be determined based on a communication delay between the server and the vehicle and a vehicle speed. In this way, the server can determine whether there is a safety risk of executing the first control instruction by the first device within the first duration. For example, the first device is a vehicle. The server can ensure driving safety of the vehicle within the first duration.

In some possible implementations, the first duration may be determined based on the communication delay between the first device and the server, a computing delay generated when the server processes data, and the speed of the first device.

With reference to the first aspect, in some implementations of the first aspect, the method further includes: The server obtains a control instruction set. The control instruction set is determined by the first device based on the first control instruction and the first duration. The server determines, based on the data collected by the sensor, whether there is a safety risk of executing a control instruction in the control instruction set by the first device within the first duration. The safety information further includes second indication information, and the second indication information indicates whether there is a safety risk of executing the control instruction in the control instruction set by the first device within the first duration.

In this embodiment of this application, the first device may report the control instruction set to the server in addition to the first control instruction. The control instruction set may be a set of a plurality of control instructions that are considered safe by the vehicle. The server determines whether there is a safety risk of executing each control instruction in the control instruction set, to help the first device predict a fault (or a potential functional safety risk) that may occur on the first device. This helps reduce a safety risk that an accident occurs due to the fault of the first device.

For example, the first device is a vehicle. The server may help the vehicle predict a fault that is about to occur on an autonomous driving computing platform of the vehicle. In this way, the server can timely detect a dangerous state of the vehicle, and detect the potential functional safety risk before the fault of the autonomous driving computing platform causes a violation of a functional safety objective.

With reference to the first aspect, in some implementations of the first aspect, if the first indication information indicates that there is no safety risk of executing the first control instruction by the first device, and the second indication information indicates that there is a safety risk of executing at least some control instructions in the control instruction set by the first device within the first duration, the safety information further includes another control instruction set. The another control instruction set is determined by the server based on the data and the first duration.

In this embodiment of this application, when determining that there is a safety risk of executing the at least some control instructions in the control instruction set by the first device, the server can include information about the another control instruction set in safety information sent to the vehicle. In this way, the vehicle can travel based on the another control instruction set obtained by the server through calculation. This helps ensure driving safety of the vehicle.

With reference to the first aspect, in some implementations of the first aspect, if the first indication information indicates that there is a safety risk of executing the first control instruction by the first device, the safety information further includes third indication information. The third indication information indicates the first device to stop working.

In this embodiment of this application, when determining that there is a safety risk of executing the first control instruction by the first device, the server can include the third indication information in the safety information sent to the vehicle, to indicate the first device to stop working. This helps avoid an accident.

For example, the first device is a vehicle. The third indication information may indicate the vehicle to perform an emergency stop, to help avoid the accident.

In some possible implementations, the server may alternatively not include the third indication information in the safety information, and the server may implicitly indicate, based on the first indication information, the first device to stop working.

With reference to the first aspect, in some implementations of the first aspect, that the server determines, based on the data collected by the sensor, whether there is a safety risk of executing the first control instruction by the first device includes: The server determines, based on the data collected by the sensor and first information, whether there is a safety risk of executing the first control instruction by the first device. The first information includes one or more of information about another device, road condition information, and map information.

In this embodiment of this application, the server can determine, based on the data uploaded by the first device and collected by the sensor, data uploaded by the another device, the road condition information, the map information, and the like, whether there is a safety risk of executing the first control instruction by the first device. The computing capability of the server is stronger than that of the first device, and the server stores more resources and data than the first device. This helps improve accuracy of fault detection performed by the server on the first device.

With reference to the first aspect, in some implementations of the first aspect, the first control instruction includes one or more of the speed, a longitudinal acceleration, and a steering angle that are of the first device.

In some possible implementations, the first device may be the vehicle, the first control instruction may be a first vehicle control instruction, and the control instruction set may be a vehicle control instruction set.

According to a second aspect, a fault detection method is provided. The method may be applied to a first device. The method includes: The first device sends data collected by a sensor of the first device and a first control instruction to a server. The first device receives safety information determined by the server based on the data collected by the sensor. The safety information includes first indication information, and the first indication information indicates whether there is a safety risk of executing the first control instruction by the first device.

With reference to the second aspect, in some implementations of the second aspect, the first indication information indicates whether there is a safety risk of executing the first control instruction by the device within first duration.

With reference to the second aspect, in some implementations of the second aspect, the first duration is determined based on a communication delay between the first device and the server and a speed of the first device.

With reference to the second aspect, in some implementations of the second aspect, the method further includes: the first device sends a control instruction set to the server. The control instruction set is determined by the first device based on the first control instruction and the first duration. The safety information further includes second indication information, and the second indication information indicates whether there is a safety risk of executing a control instruction in the control instruction set by the first device within the first duration.

With reference to the second aspect, in some implementations of the second aspect, the method further includes: if the first indication information indicates that there is a safety risk of executing the first control instruction by the first device, the first device stops working.

With reference to the second aspect, in some implementations of the second aspect, if the first indication information indicates that there is no safety risk of executing the first control instruction by the first device, and the second indication information indicates that there is a safety risk of executing at least some control instructions in the control instruction set by the first device within the first duration, the safety information further includes another control instruction set. The another control instruction set is determined by the server based on the data and the first duration. The method further includes: The first device controls, based on the another control instruction set, the first device to work.

With reference to the second aspect, in some implementations of the second aspect, the method further includes: The first device controls an autonomous driving computing platform to perform function degradation.

In this embodiment of this application, when the first device receives the safety information, if the first device determines that the another control instruction set determined by the server is different from a control instruction set determined by a vehicle, the first device may determine that the first device has a potential functional safety risk. For example, the first device is a vehicle. The vehicle can determine that an autonomous driving computing platform of the vehicle has a potential functional safety risk, so that the vehicle can control the autonomous driving computing platform to perform function degradation.

With reference to the second aspect, in some implementations of the second aspect, the method further includes: The first device prompts a user to take over the first device.

In this embodiment of this application, when determining that the autonomous driving computing platform of the vehicle has the potential functional safety risk, the vehicle can also prompt the user to take over the vehicle, or prompt the user to eliminate the safety risk. This helps ensure driving safety of the vehicle.

With reference to the second aspect, in some implementations of the second aspect, the first control instruction includes one or more of the speed, a longitudinal acceleration, and a steering angle that are of the first device.

According to a third aspect, a fault detection apparatus is provided. The apparatus includes: an obtaining unit, configured to obtain data collected by a sensor of a first device and a first control instruction; a determining unit, configured to determine, based on the data collected by the sensor, whether there is a safety risk of executing the first control instruction by the first device; and a sending unit, configured to send safety information to the first device. The safety information includes first indication information, and the first indication information indicates whether there is a safety risk of executing the first control instruction by the first device.

With reference to the third aspect, in some implementations of the third aspect, the obtaining unit is further configured to obtain information about first duration before the determining unit determines whether there is a safety risk of executing the first control instruction by the first device. The determining unit is specifically configured to determine whether there is a safety risk of executing the first control instruction by the first device within the first duration.

With reference to the third aspect, in some implementations of the third aspect, the first duration is determined based on a communication delay between the first device and the apparatus and a speed of the first device.

With reference to the third aspect, in some implementations of the third aspect, the obtaining unit is further configured to obtain a control instruction set. The control instruction set is determined by the first device based on the first control instruction and the first duration. The determining unit is further configured to determine, based on the data collected by the sensor, whether there is a safety risk of executing a control instruction in the control instruction set by the first device within the first duration. The safety information further includes second indication information, and the second indication information indicates whether there is a safety risk of executing the control instruction in the control instruction set by the first device within the first duration.

With reference to the third aspect, in some implementations of the third aspect, if the first indication information indicates that there is no safety risk of executing the first control instruction by the first device, and the second indication information indicates that there is a safety risk of executing at least some control instructions in the control instruction set by the first device within the first duration, the safety information further includes another control instruction set. The another control instruction set is determined by the apparatus based on the data and the first duration.

With reference to the third aspect, in some implementations of the third aspect, if the first indication information indicates that there is a safety risk of executing the first control instruction by the first device, the safety information further includes third indication information. The third indication information indicates the first device to stop working.

With reference to the third aspect, in some implementations of the third aspect, the determining unit is specifically configured to determine, based on the data collected by the sensor and first information, whether there is a safety risk of executing the first control instruction by the first device. The first information includes one or more of information about another device, road condition information, and map information.

With reference to the third aspect, in some implementations of the third aspect, the first control instruction includes one or more of the speed, a longitudinal acceleration, and a steering angle that are of the first device.

According to a fourth aspect, a fault detection apparatus is provided. The apparatus includes: a generation unit, configured to generate a first control instruction based on data collected by a sensor; a sending unit, configured to send the first control instruction and the data collected by the sensor; and a receiving unit, configured to receive safety information determined by a server based on the data collected by the sensor. The safety information includes first indication information, and the first indication information indicates whether there is a safety risk of executing the first control instruction by the apparatus.

With reference to the fourth aspect, in some implementations of the fourth aspect, the first indication information indicates whether there is a safety risk of executing the first control instruction by the apparatus within first duration.

With reference to the fourth aspect, in some implementations of the fourth aspect, the first duration is determined based on a communication delay between the apparatus and the server and a speed of the apparatus.

With reference to the fourth aspect, in some implementations of the fourth aspect, the sending unit is further configured to send a control instruction set to the server. The control instruction set is determined by the apparatus based on the first control instruction and the first duration. The safety information further includes second indication information, and the second indication information indicates whether there is a safety risk of executing a control instruction in the control instruction set by the apparatus within the first duration.

With reference to the fourth aspect, in some implementations of the fourth aspect, the apparatus further includes a control unit. The control unit is configured to: if the first indication information indicates that there is a safety risk of executing the first control instruction by the apparatus, control the apparatus to stop working.

With reference to the fourth aspect, in some implementations of the fourth aspect, if the first indication information indicates that there is no safety risk of executing the first control instruction by the apparatus, and the second indication information indicates that there is a safety risk of executing at least some control instructions in the control instruction set by the apparatus within the first duration, the safety information further includes another control instruction set. The another control instruction set is determined by the server based on the data and the first duration. The apparatus further includes a control unit, and the control unit is configured to control, based on the another control instruction set, the apparatus to work.

With reference to the fourth aspect, in some implementations of the fourth aspect, the control unit is further configured to control an autonomous driving computing platform to perform function degradation.

With reference to the fourth aspect, in some implementations of the fourth aspect, the apparatus further includes a prompting unit, and the prompting unit is configured to prompt a user to take over the apparatus.

With reference to the fourth aspect, in some implementations of the fourth aspect, the first control instruction includes one or more of the speed, a longitudinal acceleration, and a steering angle that are of the apparatus.

According to a fifth aspect, a fault detection apparatus is provided. The vehicle includes a sensor, an autonomous driving computing platform, and an in-vehicle safety module. The sensor is configured to send collected data to the autonomous driving computing platform. The autonomous driving computing platform is configured to determine a first control instruction based on the data. The autonomous driving computing platform is further configured to send the first control instruction and the data collected by the sensor to a server and the in-vehicle safety module. The in-vehicle safety module is configured to receive safety information determined by the server based on the data collected by the sensor. The safety information includes first indication information, and the first indication information indicates whether there is a safety risk of executing the first control instruction by a first device.

In some possible implementations, the autonomous driving computing platform may include a data distribution module, and the data distribution module may send the first control instruction and the data collected by the sensor of the first device to the server.

In some possible implementations, the data distribution module may be located inside the autonomous driving computing platform, or may be located outside the autonomous driving computing platform.

In some possible implementations, the autonomous driving computing platform is further configured to send the first control instruction and the data collected by the sensor to the in-vehicle safety module.

With reference to the fifth aspect, in some implementations of the fifth aspect, the first indication information indicates whether there is a safety risk of executing the first control instruction by the device within the first duration.

With reference to the fifth aspect, in some implementations of the fifth aspect, the first duration is determined based on a communication delay between the first device and the server and a speed of the first device.

With reference to the fifth aspect, in some implementations of the fifth aspect, the autonomous driving computing platform is further configured to determine a first control instruction set based on the first control instruction and the first duration. The autonomous driving computing platform is further configured to send a control instruction set to the server. The safety information further includes second indication information, and the second indication information indicates whether there is a safety risk of executing a control instruction in the control instruction set by the first device within the first duration.

In some possible implementations, the autonomous driving computing platform is further configured to send the first control instruction set to the in-vehicle safety module.

With reference to the fifth aspect, in some implementations of the fifth aspect, the first device is a vehicle. The in-vehicle safety module is further configured to send an instruction to a vehicle control unit VCU if the first indication information indicates that there is a safety risk of executing the first control instruction by the vehicle. The instruction is used to instruct the VCU to control the vehicle to stop travelling. The vehicle control unit VCU is configured to, in response to the received instruction, control the vehicle to stop travelling.

With reference to the fifth aspect, in some implementations of the fifth aspect, if the first indication information indicates that there is no safety risk of executing the first control instruction by the first device, and the second indication information indicates that there is a safety risk of executing at least some control instructions in the control instruction set by the first device within the first duration, the safety information further includes another control instruction set. The another control instruction set is determined by the server based on the data and the first duration. The in-vehicle safety module is further configured to determine whether a control instruction output by the autonomous driving computing platform within the first duration is in the another control instruction set.

In some possible implementations, the in-vehicle safety module is further configured to send the instruction to the vehicle control unit VCU if a second control instruction output by the autonomous driving computing platform within the first duration is not in the another control instruction set. The instruction is used to instruct the VCU to control the vehicle to stop travelling. The vehicle control unit VCU is configured to, in response to the received instruction, control the vehicle to stop travelling.

With reference to the fifth aspect, in some implementations of the fifth aspect, the in-vehicle safety module is further configured to control the autonomous driving computing platform to perform function degradation.

With reference to the fifth aspect, in some implementations of the fifth aspect, the in-vehicle safety module is further configured to send an instruction to a prompting apparatus. The instruction is used to prompt a user to take over the first device.

With reference to the fifth aspect, in some implementations of the fifth aspect, the first control instruction includes one or more of the speed, a longitudinal acceleration, and a steering angle that are of the first device.

According to a sixth aspect, an apparatus is provided. The apparatus includes a processing unit and a storage unit. The storage unit is configured to store instructions. The processing unit executes the instructions stored in the storage unit, to enable the apparatus to perform any possible method according to the first aspect.

According to a seventh aspect, an apparatus is provided. The apparatus includes a processing unit and a storage unit. The storage unit is configured to store instructions. The processing unit executes the instructions stored in the storage unit, to enable the apparatus to perform any possible method according to the second aspect.

According to an eighth aspect, a server is provided. The server includes the apparatus according to the third aspect or the sixth aspect.

According to a ninth aspect, a vehicle is provided. The vehicle includes the apparatus according to the fourth aspect, the fifth aspect, or the seventh aspect.

According to a tenth aspect, a system is provided. The system includes a server and a vehicle. The server may be the server according to the eighth aspect, and/or the vehicle may be the vehicle according to the ninth aspect.

According to an eleventh aspect, a computer program product is provided. The computer program product includes computer program code. When the computer program code is run on a computer, the computer is enabled to perform the method according to the first aspect. Alternatively, when the computer program code is run on a computer, the computer is enabled to perform the method according to the second aspect.

It should be noted that the computer program code can be totally or partially stored in a first storage medium. The first storage medium may be encapsulated with a processor, or encapsulated separately from a processor. This is not specifically limited in embodiments of this application.

According to a twelfth aspect, a computer-readable medium is provided. The computer-readable medium stores program code. When the computer program code is run on a computer, the computer is enabled to perform the method according to the first aspect or the second aspect.

According to a thirteenth aspect, an embodiment of this application provides a chip system. The chip system includes a processor, configured to invoke a computer program or computer instructions stored in a memory, to enable the processor to perform the method according to any one of the foregoing aspects or the possible designs of the foregoing aspects, or perform the method according to any one of the foregoing two aspects or the possible designs of the foregoing aspects.

With reference to the thirteenth aspect, in a possible implementation, the processor is coupled to the memory through an interface.

With reference to the thirteenth aspect, in a possible implementation, the chip system further includes the memory. The memory stores a computer program or computer instructions.

**BRIEF DESCRIPTION OF DRAWINGS**

FIG. 1 is an application scenario of a fault detection method according to an embodiment of this application;

FIG. 2 is a schematic block diagram of a system architecture according to an embodiment of this application;

FIG. 3 is a schematic diagram of an input and an output of a cloud server according to an embodiment of this application;

FIG. 4A and FIG. 4B are a schematic flowchart of a fault detection method according to an embodiment of this application;

FIG. 5 is a schematic diagram of a safety delay and a range that is met by a vehicle control instruction according to an embodiment of this application;

FIG. 6 shows a case about whether there is a safety risk in a vehicle control instruction set according to an embodiment of this application;

FIG. 7 shows another case about whether there is a safety risk in a vehicle control instruction set according to an embodiment of this application;

FIG. 8 shows still another case about whether there is a safety risk in a vehicle control instruction set according to an embodiment of this application;

FIG. 9A and FIG. 9B are a schematic flowchart of a processing process performed after an in-vehicle safety module receives safety information sent by a cloud server according to an embodiment of this application;

FIG. 10 is another schematic flowchart of a fault detection method according to an embodiment of this application;

FIG. 11 is still another schematic flowchart of a fault detection method according to an embodiment of this application;

FIG. 12 is a schematic block diagram of a fault detection apparatus according to an embodiment of this application;

FIG. 13 is another schematic block diagram of a fault detection apparatus according to an embodiment of this application; and

FIG. 14 is a schematic block diagram of a system according to an embodiment of this application.

**DESCRIPTION OF EMBODIMENTS**

The following describes the technical solutions of this application with reference to the accompanying drawings.

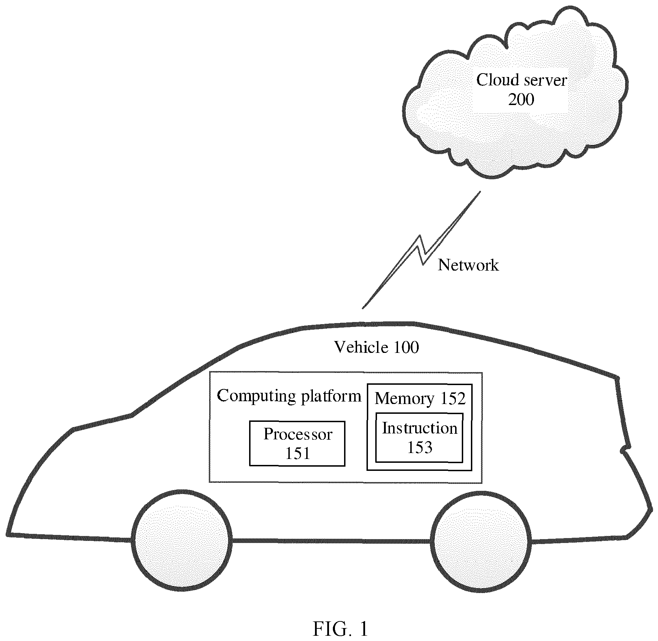

FIG. 1 is an application scenario of a fault detection method according to an embodiment of this application. A vehicle 100 and a cloud service system 200 may be included in this application scenario. The vehicle 100 and the cloud service system 200 may communicate with each other through a network.

Some or all functions of the vehicle 100 are controlled by a computing platform 150. The computing platform 150 may include at least one processor 151. The processor 151 can execute an instruction 153 stored in a non-transient computer-readable medium like a memory 152.

In some embodiments, the computing platform 150 may alternatively be a plurality of computing devices that control individual components or subsystems of the vehicle 100 in a distributed manner. The processor 151 may be any conventional processor, for example, a central processing unit (central processing unit, CPU). Alternatively, the processor 151 may further include, for example, a graphic process unit (graphic process unit, GPU), a field programmable gate array (field programmable gate array, FPGA), a system on chip (system on chip, SOC), an application-specific integrated circuit (application-specific integrated circuit, ASIC), or a combination thereof.

In addition to the instruction 153, the memory 152 may further store data, such as a road map, route information, and a location, a direction, a speed, and other such vehicle data of the vehicle, and other information. Such information may be used by the vehicle 100 and the computing platform 150 during operation of the vehicle 100 in autonomous, semi-autonomous, and/or manual modes.

It should be understood that a structure of the vehicle in FIG. 1 should not be construed as a limitation on embodiments of this application.

Optionally, the vehicle 100 may include one or more different types of transport vehicles, and may also include one or more different types of transportation tools or movable objects that operate or move on land (for example, a highway, a road, or a railway), water surface (for example, a waterway, a river, or an ocean), or in space. For example, the vehicle may include an automobile, a bicycle, a motorcycle, a train, a subway, an airplane, a boat, an aircraft, a robot, another type of transport vehicle, a movable object, or the like. This is not limited in embodiments of this application.

In addition, a cloud server may be included in the application scenario shown in FIG. 1. In this embodiment of this application, the cloud server may perform sensing and fusion and computing and inference based on data collected by a sensor and uploaded by the vehicle and other information in the cloud server (for example, information about another vehicle and road condition information), and determine, with reference to a vehicle control instruction uploaded by the vehicle, whether there is a safety risk of executing the vehicle control instruction, to determine whether a fault that affects functional safety occurs on an autonomous driving computing platform.

In an embodiment, the cloud server may alternatively be implemented by using a virtual machine.

As described above, currently, there is a solution in which a redundant output is implemented by deploying two sets of same and independent autonomous driving computing platforms and autonomous driving algorithms in the vehicle. The vehicle compares whether vehicle control instructions output by the two sets of computing platforms are consistent, to determine whether the autonomous driving computing platform is faulty. In this solution, two sets of software and hardware need to be used, which greatly increases hardware costs of the vehicle and an energy consumption requirement of autonomous driving. In addition, because the two sets of computing platforms use a same algorithm, a decision-making error caused by a disadvantage of the algorithm cannot be detected and avoided.

In view of this, an embodiment of this application provides a fault detection method. Redundant computing power of a cloud server is used to monitor functional safety of an autonomous driving computing platform of a vehicle, to find a fault that affects the functional safety of the autonomous driving computing platform from an end-to-end perspective. This helps reduce a redundancy requirement for the autonomous driving computing platform of the vehicle, and therefore reduce hardware costs and power consumption generated during autonomous driving of the vehicle. In addition, because a computing capability of the cloud server is stronger than that of the vehicle, the cloud server can use higher computing resolution during computing, and provide a more reliable computing result compared with in-vehicle redundancy. This helps improve accuracy of fault detection of the autonomous driving computing platform.

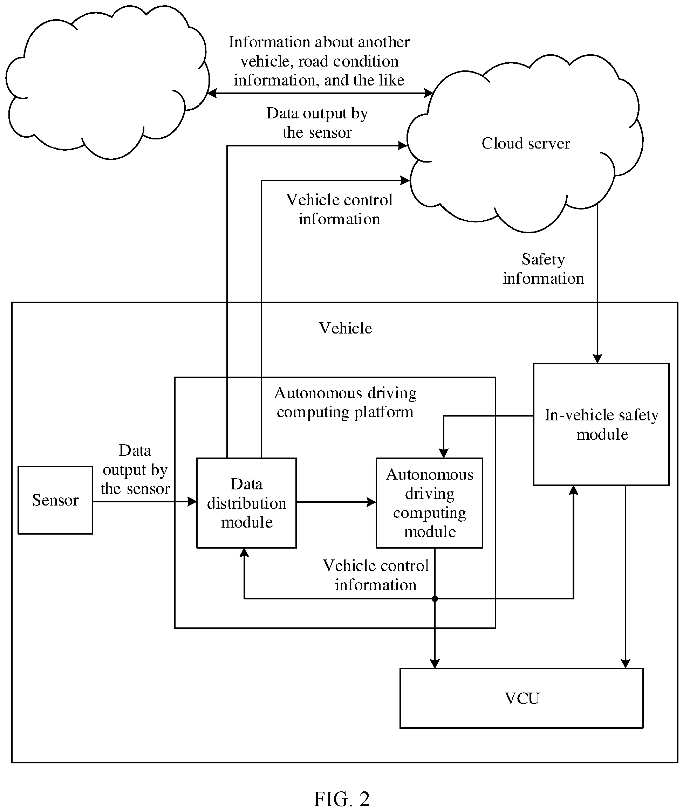

FIG. 2 is a schematic block diagram of a system architecture according to an embodiment of this application. The system includes a vehicle and a cloud server. The vehicle includes a sensor, an autonomous driving computing platform, an in-vehicle safety module, and a vehicle control unit (vehicle control unit, VCU). The autonomous driving computing platform includes a data distribution module and an autonomous driving computing module. The system can provide a fault detection and monitoring capability for the autonomous driving computing platform of the vehicle by using the cloud server.

It should be understood that the computing platform 150 shown in FIG. 1 may include the autonomous driving computing platform shown in FIG. 2.

The sensor of the vehicle includes but is not limited to a laser radar, a millimeter-wave radar, a photographing apparatus, an ultrasonic sensor, a global positioning system, an inertial measurement unit, and the like.

The data distribution module can distribute data output by the sensor to the autonomous driving computing module, the in-vehicle safety module, and the cloud server. It should be understood that this embodiment of this application is described by using an example in which the data distribution module is located inside the autonomous driving computing platform, or the data distribution module is located outside the autonomous driving computing platform. The data distribution module may include one or more modules. The data distribution module is further configured to send vehicle control information to the cloud server. The vehicle control information includes but is not limited to a vehicle control instruction (for example, an acceleration control command of the vehicle and a steering command of the vehicle), safety delay information, and other body and chassis information.

The autonomous driving computing module can perform sensing and fusion, computing and inference, and planning and decision-making based on the data output by the sensor, and output the vehicle control information to the data distribution module, the VCU, and the in-vehicle safety module.

The in-vehicle safety module may be independent of the autonomous driving computing platform, and is configured to collect and handle a fault of the autonomous driving computing platform. The in-vehicle safety module may be deployed outside the autonomous driving computing platform as an independent module, or may be deployed inside the autonomous driving computing platform. Optionally, hardware of the in-vehicle safety module may be independent of the autonomous driving computing module, so that a common cause failure of the hardware and the autonomous driving computing module is avoided.

The VCU may be configured to receive and execute a vehicle control instruction output by the autonomous driving computing platform.

The cloud server may be an edge computing server or a centrally deployed server, and may provide a fault detection capability of the autonomous driving computing platform.

The sensor of the vehicle transmits data to the data distribution module, and the data distribution module distributes all or a portion of the data to the autonomous driving computing module, the in-vehicle safety module, and the cloud server. The autonomous driving computing module performs calculation and makes a decision based on the data output by the sensor, and generates the vehicle control information. The autonomous driving computing module can deliver vehicle control information to the VCU and the in-vehicle safety module, and send the information to the cloud server by using the data distribution module. The VCU controls the vehicle according to the vehicle control instruction in the vehicle control information. The cloud server performs sensing and fusion and computing and inference based on data collected by the sensor and uploaded by the vehicle and other information obtained by the cloud server (for example, information about another vehicle and road condition information), and determine, with reference to a current vehicle control instruction, whether there is a safety risk of executing the vehicle control instruction by the vehicle, to determine whether a fault that affects functional safety occurs on the autonomous driving computing platform. If the cloud server determines that there is a safety risk of executing the vehicle control instruction by the vehicle, the cloud server calculates a risk level, and sends, to the in-vehicle safety module, safety information that includes information indicating whether the vehicle violates the functional safety (or whether the autonomous driving computing platform is faulty), the risk level, and a vehicle control recommendation (for example, a vehicle control instruction calculated by the cloud server). The in-vehicle safety module determines, in combination with the received safety information delivered by the cloud server, the data collected by the sensor, and the vehicle control information, whether to perform function degradation on the autonomous driving computing platform, or whether to instruct the VCU to perform an emergency stop. If the in-vehicle safety module determines that the autonomous driving computing platform has lost a vehicle control capability (for example, the risk level described below is high), the in-vehicle safety module may send an instruction to the VCU. The instruction may be used to instruct the VCU to control the vehicle to perform the emergency stop.

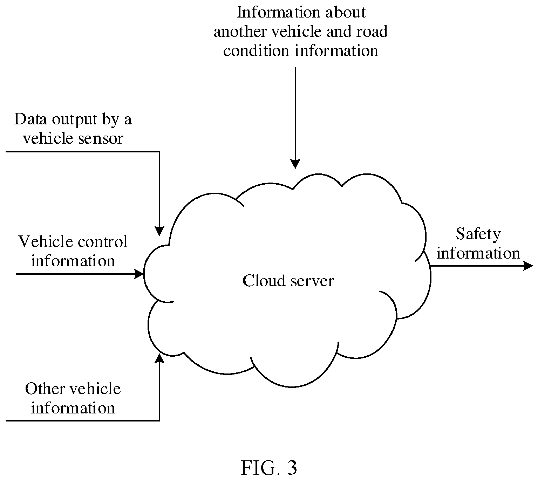

FIG. 3 is a schematic diagram of an input and an output of a cloud server according to an embodiment of this application. The input of the cloud server includes data output by a sensor in a vehicle, vehicle control information, information about another vehicle, and road condition information. The cloud server may output safety information, and the safety information includes information indicating whether the vehicle violates functional safety, a risk level of the vehicle, a vehicle control recommendation, and the like.

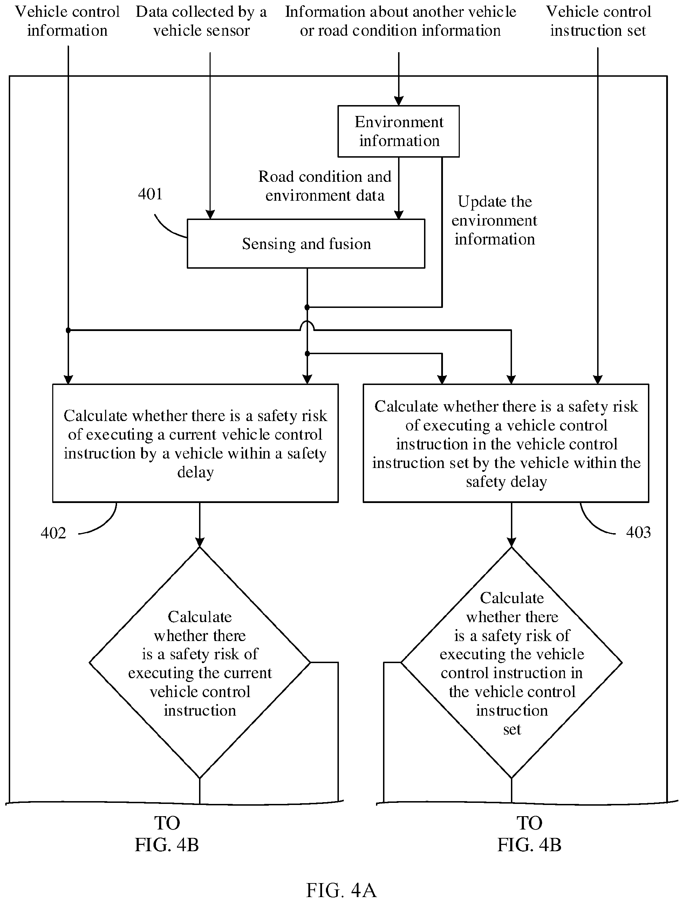

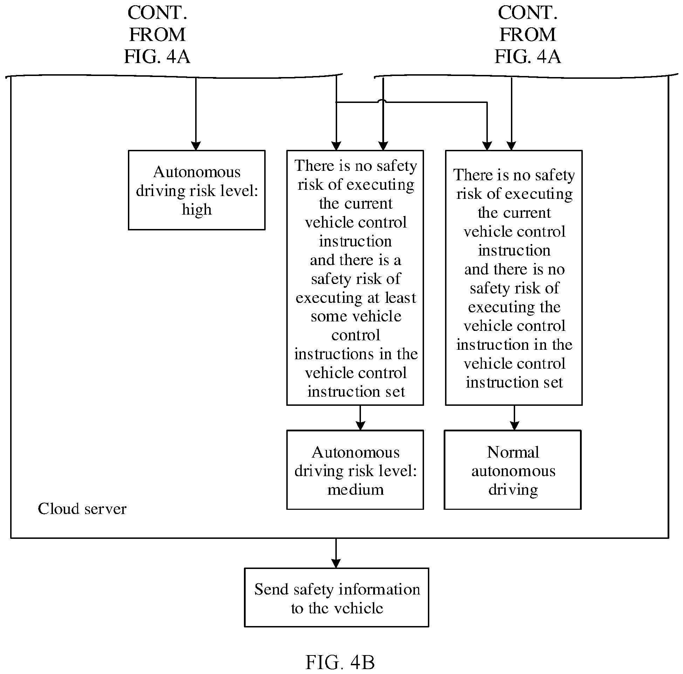

FIG. 4A and FIG. 4B are a schematic flowchart of a fault detection method 400 according to an embodiment of this application. The method 400 includes the following steps.

S401: A cloud server performs sensing and fusion based on data that is collected by a sensor and that is uploaded by a vehicle, data uploaded by another vehicle, and data such as a road condition, and periodically performs calculation to form a real-time road model.

It should be understood that the real-time road model may include a distance-position relationship between a current vehicle, a vehicle around the vehicle, and a road environment (for example, an obstacle or a traffic light).

In an embodiment, the cloud server may negotiate and synchronize a safety delay $T_{E2E\_safety}$ with the vehicle. The safety delay $T_{E2E\_safety}$ is maximum duration from a time point at which a fault occurs to a time point at which the cloud server detects the fault and enables the vehicle to enter a safe state. The safety delay $T_{E2E\_safety}$ is related to information such as a communication delay between the cloud server and the vehicle and a vehicle speed, and is equivalent to a dynamic fault tolerance time interval (fault tolerance time interval, FTTI). For example, Formula (1) shows a manner of calculating the safety delay $T_{E2E\_safety}$:

$$T_{E2E\_safety}=t_{E2E\_delay}+t_{FRTI}+t_{safe\_margin} \quad (1)$$

Herein, $t_{E2E\_delay}$ is an end-to-end delay from a time point at which vehicle data is uploaded to the cloud server to a time point at which the vehicle receives safety information from the cloud server, and may include the communication delay between the vehicle and the cloud server and a computing delay of the cloud server.

For example, before sending a vehicle control instruction to the cloud server, the vehicle may include, in a first message sent to the cloud server, a timestamp corresponding to a moment at which the vehicle sends the first message. When receiving the first message, the cloud server may determine, as a first communication delay between the cloud server and the vehicle, a time difference between a moment at which the cloud server receives the first message and the moment corresponding to the timestamp. Similarly, the cloud server may include, in a second message sent to the vehicle, a timestamp corresponding to a moment at which the cloud server sends the second message. When receiving the second message, the vehicle may determine, as a second communication delay between the vehicle and the cloud server, a time difference between a moment at which the vehicle receives the second message and the moment corresponding to the timestamp. Further, the vehicle may indicate the second communication delay to the cloud server, and the cloud server may use a sum of the first communication delay and the second communication delay as the communication delay between the cloud server and the vehicle.

Herein, $t_{FRTI}$ is maximum duration from a time point at which the vehicle receives the safety information to a time point at which the fault is handled and the vehicle enters the safe state. The maximum duration in which the vehicle enters the safe state is related to a real-time status like the vehicle speed of the vehicle. For example, a higher vehicle speed indicates longer duration in which the vehicle enters the safe state.

Herein, $t_{safe\_margin}$ indicates a safety margin of a system. When the cloud server detects an abnormal vehicle control instruction, the abnormal vehicle control instruction has been delivered and taken effect. Therefore, compensation time $t_{safe\_margin}$ is needed for the safety delay to ensure that a collision or danger can still be avoided after the abnormal vehicle control instruction takes effect.

It should be understood that different values may be set for $t_{safe\_margin}$ in different scenarios (for example, travelling on an urban road and travelling on a highway), and different vendors may alternatively set different values for $t_{safe\_margin}$. This is not limited in embodiments of this application.

Optionally, first duration may be preset, or may be obtained by the server from another device (for example, a first device or another server).

Optionally, first duration may be determined by the server based on a working scenario of a first device. For example, the first device is a vehicle. If the server determines that a scenario in which the vehicle currently travels is an urban road, the server may determine a value of the first duration as a first value. Alternatively, if the server determines that a scenario in which the vehicle currently travels is a highway, the server may determine a value of the first duration as a second value.

In an embodiment, the vehicle may send a vehicle control instruction set to the cloud server in addition to vehicle control information. The vehicle control instruction set is a set of vehicle control instructions (mainly including a steering angle and a longitudinal motion acceleration) through which an autonomous driving computing platform considers the vehicle safe at this time, that is, the vehicle determines that there is no safety risk of executing the vehicle control instruction in the vehicle control instruction set by the vehicle within the safety delay $T_{E2E\_safety}$. For example, a current vehicle control instruction of the vehicle indicates that the vehicle speed is 3 km/h, and at 3 km/h, the vehicle may determine that there is no safety risk of executing all vehicle control instructions indicating that a steering angle is within $\pm 15°$ and an acceleration is within 0 to +5 m/s². In this case, the vehicle control instruction set may include the vehicle control instructions indicating that the steering angle is within $\pm 15°$ and the acceleration is within a range of 0 to +5 m/s².

The autonomous driving computing module synchronizes, to the cloud server and an in-vehicle safety module, the vehicle control instruction set for which the vehicle determines that there is no safety risk within the safety delay $T_{E2E\_safety}$. This helps the cloud server determine whether the autonomous driving computing platform has found all potential obstacles and other threats.

The autonomous driving computing platform may identify an environment around the vehicle based on data output by the sensor, to determine the vehicle control instruction set, and send the vehicle control instruction set to the cloud server. The cloud server may determine, based on the vehicle control instruction set, whether the vehicle correctly determines the environment around the vehicle. After the autonomous driving computing platform issues the vehicle control instruction set, all vehicle control instructions within the safety delay $T_{E2E\_safety}$ may be within a range of the vehicle control instruction set. If the safety delay $T_{E2E\_safety}$ is greater than a vehicle control instruction issuing period, a real-time vehicle control instruction may be included in one or more vehicle control instruction sets that are previously issued.

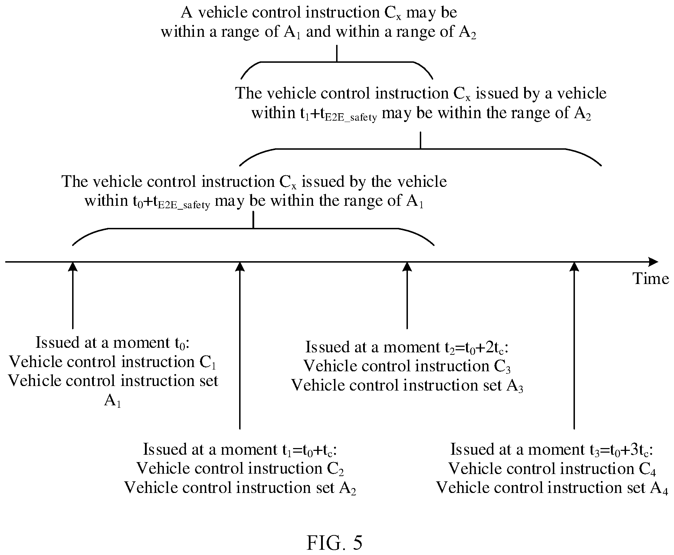

FIG. 5 is a schematic diagram of a safety delay $T_{E2E\_safety}$ and a range that is met by a vehicle control instruction according to an embodiment of this application. If the autonomous driving computing platform issues a vehicle control instruction $C_1$ and a vehicle control instruction set $A_1$ at a moment $t_0$, and the autonomous driving computing platform further issues another vehicle control instruction $C_x$ within $T_{E2E\_safety}$ from $t_0$, the another vehicle control instruction $C_x$ may be in the vehicle control instruction set $A_1$. If the autonomous driving computing platform issues a vehicle control instruction $C_2$ and a vehicle control instruction set $A_2$ at a moment $t_1$, and the autonomous driving computing platform further issues another vehicle control instruction $C_x$ within $T_{E2E\_safety}$ from $t_1$, the another vehicle control instruction $C_x$ may be in the vehicle control instruction set $A_2$.

For example, if the vehicle issues the vehicle control instruction $C_2$ and the safe vehicle control instruction set $A_2$ at the moment $t_1$, and the moment $t_1$ is within $T_{E2E\_safety}$ from $t_0$, the vehicle control instruction $C_2$ may be within a range of the safe vehicle control instruction set $A_1$.

For another example, if the vehicle issues a vehicle control instruction $C_3$ and a safe vehicle control instruction set $A_3$ at a moment $t_2$, and the moment $t_2$ is within $T_{E2E\_safety}$ from $t_0$, the vehicle control instruction $C_3$ may be within a range of the safe vehicle control instruction set $A_1$.

For another example, if the moment $t_2$ is within $T_{E2E\_safety}$ from $t_1$, the vehicle control instruction $C_3$ may be within a range of the safe vehicle control instruction set $A_2$.

For another example, if the vehicle issues a vehicle control instruction $C_4$ and a safe vehicle control instruction set $A_4$ at a moment $t_3$, and the moment $t_3$ is within $T_{E2E\_safety}$ from $t_1$, the vehicle control instruction $C_4$ may be within a range of the safe vehicle control instruction set $A_2$.

S402: The cloud server calculates, based on the real-time road model and the vehicle control information uploaded by the vehicle, whether there is a safety risk of executing a current vehicle control instruction by the vehicle within the safety delay $T_{E2E\_safety}$.

The cloud server calculates, based on the real-time road model in step S401 and the current vehicle control instruction (including vehicle speed information v_now, longitudinal acceleration information a_now, steering angle information $\alpha$_now, body and chassis information, and the like) uploaded by the vehicle, whether there is a safety risk of executing the current vehicle control instruction by the vehicle within the safety delay $T_{E2E\_safety}$. Some safety models may be used to calculate the safety risk. For example, a responsibility sensitive safety (responsibility sensitive safety, RSS) model is used to determine whether a distance between the vehicle and an obstacle still meets a safety distance requirement.

For example, the RSS model includes definitions of the following scenarios.

(1) Safe distance

The safe distance is a distance within which a collision can still be avoided in a worst case. The worst case means that, when finding that a vehicle starts braking at a maximum braking acceleration, a vehicle behind has time to respond, still advances at a maximum acceleration during the response time, and then changes to braking at a minimum braking acceleration, until a danger is relieved.

(2) Lane change

Although another vehicle is responsible for a safety accident caused by a lane change of the another vehicle, a horizontal safe distance in a lane change scenario is defined in the RSS model. An autonomous vehicle can be safe as long as an enough safe distance is maintained.

(3) Right of way

Even if a vehicle violates a traffic rule and enters a road on which an autonomous vehicle has the right of way, the autonomous vehicle cannot travel forward because of a higher right of way. Instead, when the autonomous vehicle has enough time to brake and avoid an accident, the autonomous vehicle has to brake. If the autonomous vehicle does not brake, the autonomous vehicle should be responsible for the accident.

In an embodiment, that the cloud server calculates whether there is a safety risk of executing the current vehicle control instruction by the vehicle within the safety delay $T_{E2E\_safety}$ includes: The cloud server calculates whether there is a safety risk of executing the current vehicle control instruction by the vehicle within a safety delay $T_{E2E\_safety}$ starting from a time point at which the vehicle sends the current vehicle control instruction to the cloud server. For example, the cloud server determines whether the distance that is between the vehicle and the obstacle and that is in the RSS model still meets the safety distance requirement within the safety delay $T_{E2E\_safety}$.

For example, when the vehicle sends the current vehicle control instruction to the cloud server, information about a timestamp may further be carried (the timestamp may correspond to a moment at which the vehicle sends the current vehicle control instruction to the cloud server). When receiving the vehicle control instruction, the cloud server may calculate whether there is a safety risk of executing the current vehicle control instruction by the vehicle within the safety delay $T_{E2E\_safety}$ starting from the moment corresponding to the timestamp.

For another example, when the vehicle sends the current vehicle control instruction to the cloud server, information about a timestamp may not be carried. When receiving the current vehicle control instruction sent by the vehicle, the cloud server may determine, based on a moment at which the cloud server receives the current vehicle control instruction and a one-way communication delay (for example, the foregoing first communication delay) between the cloud server and the vehicle, a moment at which the vehicle sends the current vehicle control instruction. Therefore, the cloud server may calculate whether there is a safety risk of executing the current vehicle control instruction by the vehicle within a safety delay $T_{E2E\_safety}$ starting from the moment at which the vehicle sends the current vehicle control instruction.

In an embodiment, that the cloud server calculates whether there is a safety risk of executing the current vehicle control instruction by the vehicle within the safety delay $T_{E2E\_safety}$ includes: The cloud server calculates whether there is a safety risk of executing the current vehicle control instruction by the vehicle within a safety delay $T_{E2E\_safety}$ starting from a time point at which the cloud server receives the current vehicle control instruction.

S403: The cloud server calculates, based on the vehicle control instruction set uploaded by the vehicle, whether there is a safety risk of executing the vehicle control instruction in the vehicle control instruction set by the vehicle within the safety delay $T_{E2E\_safety}$.

It should be understood that there is no actual sequence between S402 and S403.

It should be further understood that, that the cloud server calculates whether there is a safety risk of executing the vehicle control instruction in the vehicle control instruction set by the vehicle within the safety delay $T_{E2E\_safety}$ may also be understood as that the cloud server determines whether a risk like a collision occurs after each vehicle control instruction in the vehicle control instruction set is run for $T_{E2E\_safety}$. If there is no collision risk for each vehicle control instruction in the vehicle control instruction set, the cloud server determines that the vehicle is in the safe state in the vehicle control instruction set; otherwise, the vehicle is in a non-safe state.

In an embodiment, that the cloud server calculates whether there is a safety risk of executing the vehicle control instruction in the vehicle control instruction set by the vehicle within the safety delay $T_{E2E\_safety}$ includes: The cloud server calculates whether there is a safety risk of executing the vehicle control instruction in the vehicle control instruction set by the vehicle within a safety delay $T_{E2E\_safety}$ starting from a time point at which the vehicle sends the vehicle control instruction set to the cloud server.

It should be understood that, for how the cloud server determines a moment at which the vehicle sends the vehicle control instruction set to the cloud server, refer to the foregoing process in which the cloud server determines the moment at which the vehicle sends the current vehicle control instruction to the cloud server. Details are not described herein again.

In an embodiment, that the cloud server calculates whether there is a safety risk of executing the vehicle control instruction in the vehicle control instruction set by the vehicle within the safety delay $T_{E2E\_safety}$ includes: The cloud server calculates whether there is a safety risk of executing the vehicle control instruction in the vehicle control instruction set by the vehicle within a safety delay $T_{E2E\_safety}$ starting from a time point at which the cloud server receives the vehicle control instruction set.

For example, it is assumed that the vehicle control instruction set is a rectangle centered on the current vehicle control instruction ($\alpha\_now$, $a\_now$). There may be the following three cases about whether there is a safety risk of executing the vehicle control instruction set.

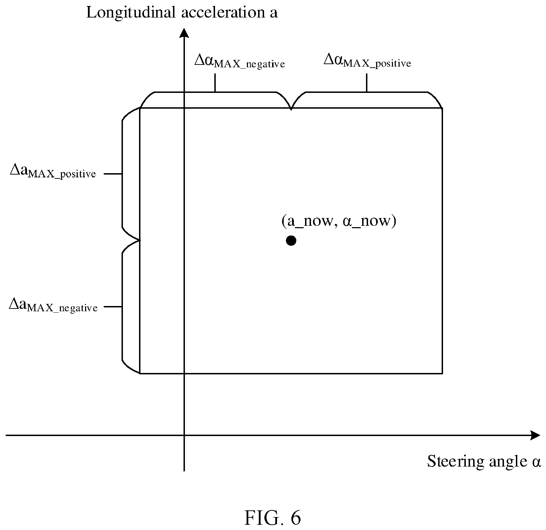

FIG. 6 shows a case about whether there is a safety risk in a vehicle control instruction set according to an embodiment of this application. The cloud server determines that there is no safety risk of executing the current vehicle control instruction ($\alpha\_now$, $a\_now$) and all vehicle control instructions in the vehicle control instruction set by the vehicle within the $T_{E2E\_safety}$ (there is no shadow in a rectangular area in FIG. 6). In this case, the cloud server considers that the autonomous driving computing platform of the vehicle has no functional safety-related fault.

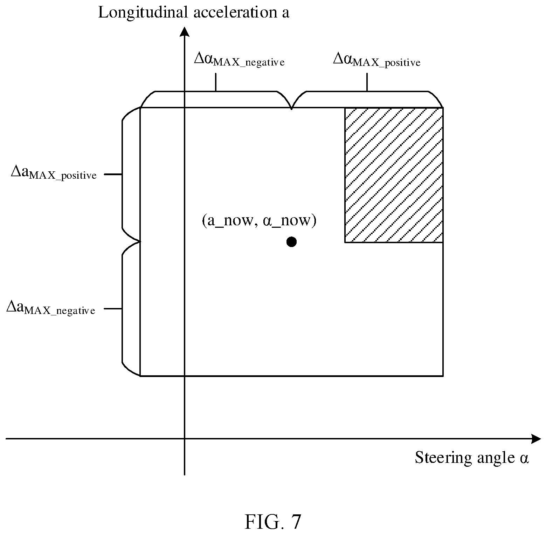

FIG. 7 shows another case about whether there is a safety risk in a vehicle control instruction set according to an embodiment of this application. The cloud server determines that the current vehicle control instruction ($\alpha\_now$, $a\_now$) does not immediately cause an unavoidable functional safety accident, but a fault occurs on the autonomous driving computing platform. As a result, not all obstacles are identified or there is a possible dangerous vehicle control instruction. As shown in FIG. 7, there is no safety risk of executing the current vehicle control instruction ($\alpha\_now$, $a\_now$) by the vehicle within $T_{E2E\_safety}$, but there is a safety risk of executing at least some vehicle control instructions in the vehicle control instruction set by the vehicle. The cloud server may determine that, in the vehicle control instruction set, there is a non-safe state point (a shaded area in a rectangular area in FIG. 7) indicating that there is an actual collision or a functional safety objective is violated, that the autonomous driving computing platform fails to timely identify an obstacle or a danger, and that a fault violating the functional safety objective may occur on the vehicle, but the collision will not occur immediately (an autonomous driving risk level is medium). The cloud server may consider that the autonomous driving computing platform cannot identify a risk, or that the autonomous driving computing platform is faulty.

For example, as shown in FIG. 7, in the vehicle control instruction set uploaded by the vehicle to the cloud server, the steering angle may be within a range of (-2°, 15°) and a longitudinal acceleration may be within a range

of (2 m/s$^2$, 10 m/s$^2$). However, the cloud server determines, based on the data collected by the sensor and the safety delay, that a steering angle meeting a functional safety expectation is within a range of (-2°, 10°) and a longitudinal acceleration may be within a range of (2 m/s$^2$, 6 m/s$^2$). Optionally, the cloud server may include, in the safety information, another vehicle control instruction set obtained by the cloud server through calculation. In the another vehicle control instruction set, a steering angle is within a range of (-2°, 10°) and a longitudinal acceleration may be within a range of (2 m/s$^2$, 6 m/s$^2$).

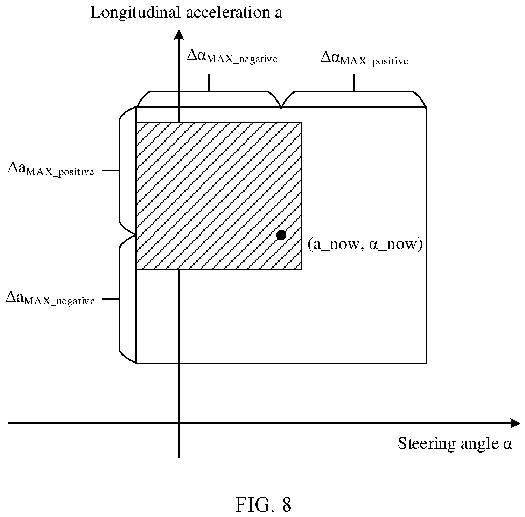

FIG. 8 shows still another case about whether there is a safety risk in a vehicle control instruction set according to an embodiment of this application. The cloud server determines that the current vehicle control instruction is in a non-safe state (a current vehicle control instruction ($\alpha$_now, a_now) in FIG. 8 is located in a shadowed area), the autonomous driving computing platform has a critical fault, the vehicle is in the non-safe state, and there is a high risk of collision (the autonomous driving risk level is high). In this case, the cloud server may send, to the vehicle, a vehicle control instruction indicating the vehicle to perform an emergency stop.

In an embodiment, the cloud server sends the safety information to the vehicle based on calculation results in steps S402 and S403. The safety information may include information indicating whether a fault threatening functional safety occurs on the autonomous driving computing platform.

Optionally, if the safety information indicates that the fault threatening the functional safety occurs on the autonomous driving computing platform, the cloud server may further include a risk level of the fault in the safety information.

Optionally, when determining that a medium-risk issue occurs on the autonomous driving computing platform, the cloud server may further include, in the safety information, a new vehicle control instruction set calculated by the cloud server.

Optionally, when determining that a high-risk issue occurs on the autonomous driving computing platform, the cloud server may further include, in the safety information, indication information indicating the vehicle to perform an emergency stop.

In an embodiment, the safety information may include first indication information and second indication information. The first indication information indicates whether there is a safety risk of executing the current vehicle control instruction by the vehicle. The second indication information indicates whether there is a safety risk of executing the vehicle control instruction in the vehicle control instruction set by the vehicle.

It should be understood that, that the first indication information indicates that there is no safety risk of executing the current vehicle control instruction by the vehicle, and the second indication information indicates that there is no safety risk of executing the vehicle control instruction in the vehicle control instruction set by the vehicle may be understood as that the cloud server determines that the vehicle has no safety risk. That the first indication information indicates that there is no safety risk of executing the current vehicle control instruction by the vehicle, and the second indication information indicates that there is a safety risk of executing the at least some vehicle control instructions in the vehicle control instruction set by the vehicle may be understood as that the cloud server determines that the autonomous driving risk level of the vehicle is medium. That the first indication information indicates that there is a safety risk of executing the current vehicle control instruction by the vehicle may be understood as that the cloud server determines that the autonomous driving risk level of the vehicle is high.

Optionally, if the first indication information indicates that there is a safety risk of executing the current vehicle control instruction by the vehicle, the second indication information may not be carried in the safety information.

Optionally, if the first indication information indicates that there is a safety risk of executing the current vehicle control instruction by the vehicle, third indication information may further be carried in the safety information. The third indication information indicates the vehicle to stop travelling.

It should be understood that the cloud server may include the third indication information in the safety information, to explicitly indicate the vehicle to stop travelling; or the third indication information may not be carried in the safety information, and the cloud server may implicitly indicate, by using the first indication information, the vehicle to stop travelling.

Optionally, if the first indication information indicates that there is no safety risk of executing the current vehicle control instruction by the vehicle, and the second indication information indicates that there is a safety risk of executing the vehicle control instruction in the vehicle control instruction set by the vehicle, the another vehicle control instruction set may further be carried in the safety information. The another vehicle control instruction set may be determined by the cloud server based on the data collected by the sensor and safety delay information. For example, as shown in FIG. 7, the cloud server may include, in the safety information, the another vehicle control instruction set obtained by the cloud server through calculation. In the another vehicle control instruction set, the steering angle is within the range of (-2°, 10°) and the longitudinal acceleration may be within the range of (2 m/s$^2$, 6 m/s$^2$).

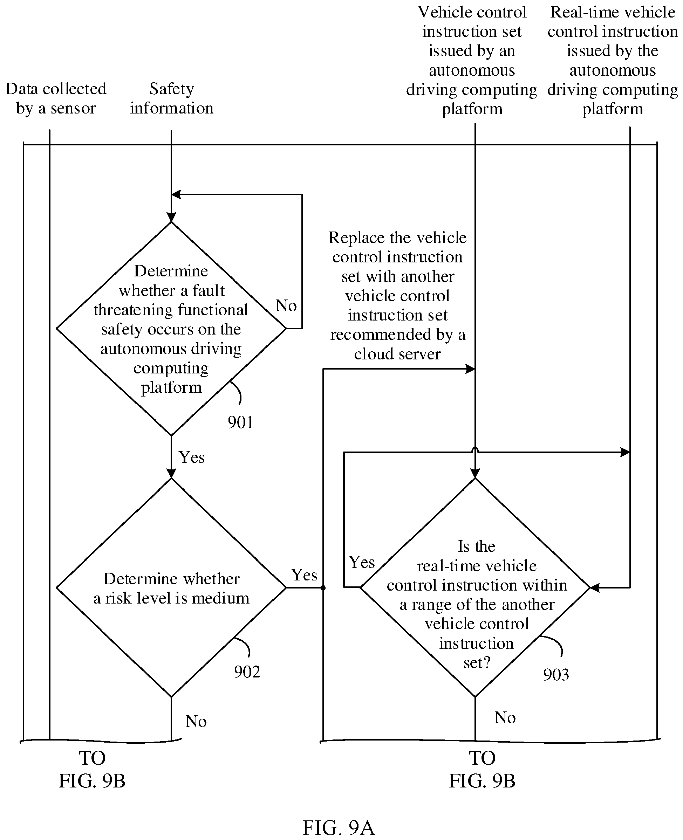

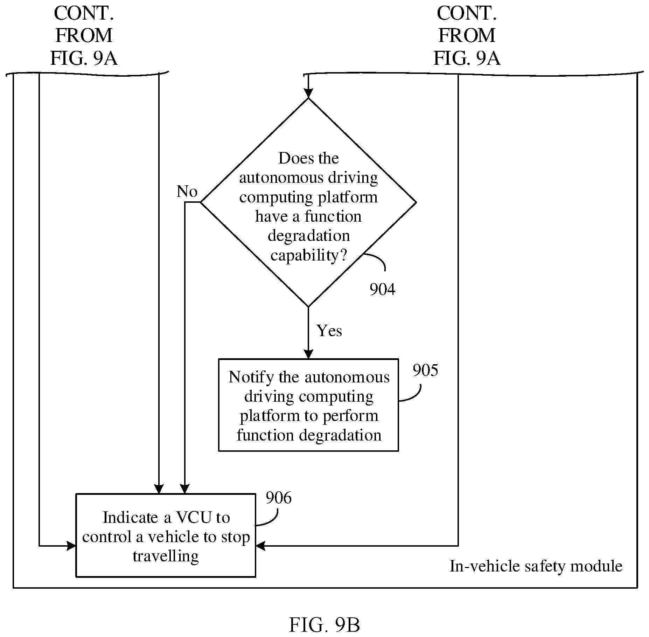

FIG. 9A and FIG. 9B are a schematic flowchart of a processing process performed after an in-vehicle safety module receives safety information sent by a cloud server according to an embodiment of this application. The process includes the following steps.

S901: The in-vehicle safety module determines, based on the safety information, whether the fault threatening the functional safety occurs on the autonomous driving computing platform.

For example, if the safety information indicates that the fault threatening the functional safety occurs on the autonomous driving computing platform of the vehicle, the in-vehicle safety module may perform S902. In this embodiment of this application, if the safety information indicates that the risk level of the fault is medium or high, the in-vehicle safety module may determine that the fault threatening the functional safety occurs on the autonomous driving computing platform of the vehicle.

If the safety information indicates that no fault threatening the functional safety occurs on the autonomous driving computing platform of the vehicle, the in-vehicle safety module may continue to receive the safety information.

S902: If the in-vehicle safety module determines, based on the safety information, that the fault threatening the functional safety occurs on the autonomous driving computing platform, the in-vehicle safety module determines whether a risk level carried in the safety information is medium.

For example, if the in-vehicle safety module determines that the risk level carried in the safety information is medium, the another vehicle control instruction set may further be carried in the safety information. The in-vehicle safety module may replace the vehicle control instruction set determined by the vehicle with the another vehicle control instruction set recommended by the cloud server.

S903: If the in-vehicle safety module determines that the risk level carried in the safety information is medium, the in-vehicle safety module determines whether a vehicle control instruction output by the autonomous driving computing platform is within a range of the another vehicle control instruction set.

For example, in the another vehicle control instruction set, the steering angle is within the range of (-2°, 10°) and the longitudinal acceleration may be within the range of (2 m/s², 6 m/s²). If the steering angle in a real-time vehicle control instruction issued by the autonomous driving computing platform is 15°, the in-vehicle safety module may determine that the vehicle control instruction is not within the range of the another vehicle control instruction set, so that the in-vehicle safety module may perform S906.

S904: If the in-vehicle safety module determines that the risk level carried in the safety information is medium, the in-vehicle safety module determines whether the autonomous driving computing platform has a function degradation capability.

It should be understood that there is no actual sequence between S903 and S904.

S905: If the in-vehicle safety module determines that the autonomous driving computing platform has the function degradation capability, the in-vehicle safety module may notify the autonomous driving computing platform to perform function degradation.

If the in-vehicle safety module determines that the autonomous driving computing platform does not have the function degradation capability, the in-vehicle safety module may perform S906.

In an embodiment, if the in-vehicle safety module determines that the risk level carried in the safety information is medium, the in-vehicle safety module may further send an instruction to a prompting apparatus. The instruction is used to instruct the prompting apparatus to prompt a user to take over the vehicle or eliminate the fault of the autonomous driving computing platform.

For example, the in-vehicle safety module may send an instruction to a cockpit domain controller (cockpit domain controller, CDC) of the vehicle. The instruction is used to instruct the user to take over the vehicle. For example, after receiving the instruction, the CDC may prompt, by using a human machine interface (human machine interface, HMI), the user to take over the vehicle; or an in-vehicle voice assistant may be controlled to prompt, by using a sound, the user to take over the vehicle; or the user may be prompted, by controlling presentation effect of an atmosphere lamp, to take over the vehicle.

S906: The in-vehicle safety module indicates the VCU to control the vehicle to stop travelling.

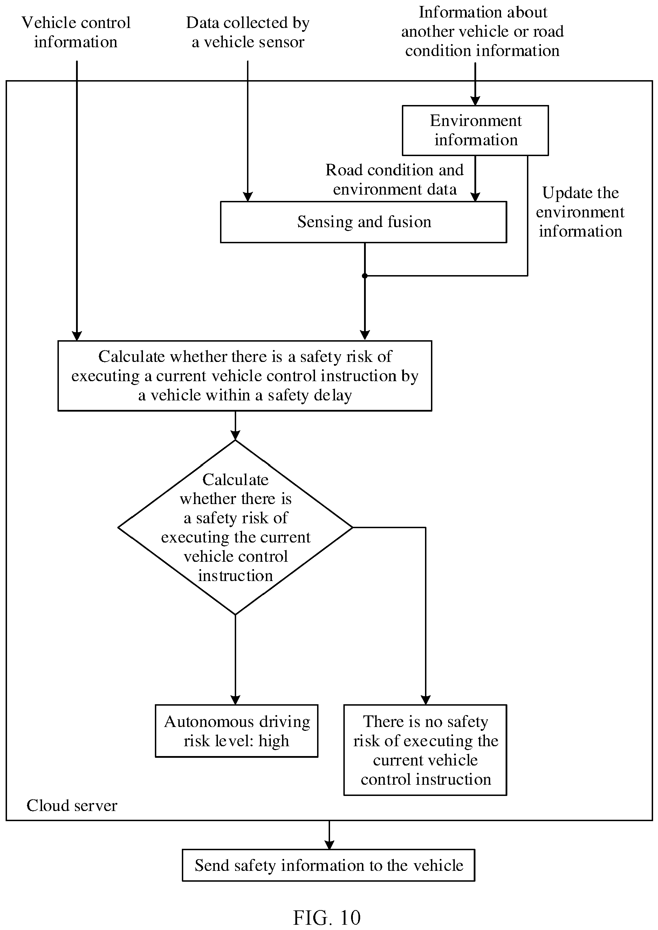

With reference to FIG. 4A to FIG. 9B, the foregoing describes a case in which the vehicle sends the current vehicle control instruction and the vehicle control instruction set to the cloud server, so that the cloud server can determine, based on the current vehicle control instruction, whether the vehicle is in a dangerous state, and determine, based on the vehicle control instruction set, whether the vehicle has a potential safety risk. The vehicle may send the current vehicle control instruction rather than the vehicle control instruction set to the cloud server in some scenarios with a restricted use condition or a low requirement on functional safety, for example, an autonomous driving scenario like low-speed campus commuting, a mining truck, or an unmanned delivery vehicle; or a low-speed driving state of auto parking switched from autonomous driving; or a scenario in which the cloud server has an extremely low delay, so that real-time monitoring can be performed without a need to predict a potential risk of autonomous driving. The cloud server may calculate whether there is a safety risk of executing the current vehicle control instruction by the vehicle, to determine whether the fault occurs on the autonomous driving computing platform. FIG. 10 is another schematic flowchart of a fault detection method according to an embodiment of this application. For how the cloud server calculates whether there is a safety risk of executing the current vehicle control instruction by the vehicle, refer to the descriptions in FIG. 4A and FIG. 4B. For brevity, details are not described herein again.

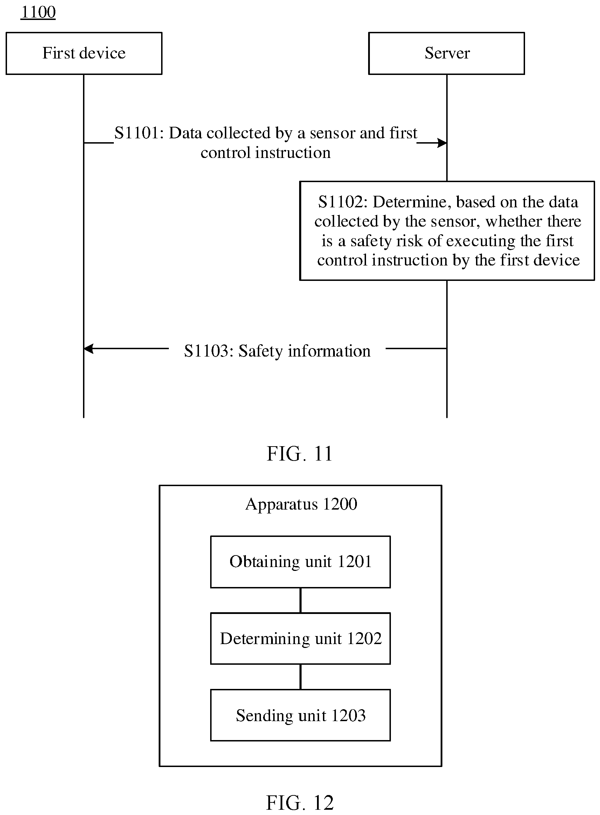

FIG. 11 is a schematic flowchart of a fault detection method 1100 according to an embodiment of this application. The method 1100 may be performed by a first device and a server. The method 1100 includes the following steps.

S1101: The first device sends data collected by a sensor of the first device and a first control instruction to the server.

Optionally, the first device may first obtain the data collected by the sensor, and determine the first control instruction based on the data collected by the sensor. The first control instruction may be a control instruction used to instruct that the first device has no safety risk.

Optionally, the first device may determine the first control instruction based on a first functional safety algorithm and the data collected by the sensor. The server may determine, based on a second functional safety algorithm and the data collected by the sensor, whether there is a safety risk of executing the first control instruction by the first device. The first functional safety algorithm and the second functional safety algorithm may be different algorithms.

In this embodiment of this application, the server and the first device may use different functional safety algorithms. This helps avoid a functional safety accident caused by a disadvantage of a single algorithm, and helps improve accuracy of fault detection of the first device.

Optionally, the server and the first device are two different entities.

Optionally, the first control instruction includes one or more of a speed, a longitudinal acceleration, and a steering angle that are of the first device.

Optionally, the first device may be a vehicle.

Optionally, before the first device sends the data collected by the sensor of the first device and the first control instruction to the server, the method further includes: The first device is determined to be in an autonomous driving state.

For example, the first device is a vehicle. As mentioned in this embodiment of this application, that the vehicle is in the autonomous driving state may mean that the vehicle is in autonomous driving levels L1 to L5 specified by the Society of Automotive Engineers SAE. The autonomous driving level does not necessarily mean that the vehicle is in a non-manual driving state. For example, when the vehicle is in the autonomous driving level L2 or the vehicle is in the autonomous driving state, the vehicle needs to be manually driven.

S1102: The server determines, based on the data collected by the sensor, whether there is a safety risk of executing the first control instruction by the first device.

Optionally, before the server determines whether there is a safety risk of executing the first control instruction by the first device, the method further includes: The server obtains information about first duration. That the server determines whether there is a safety risk of executing the first control instruction by the first device includes: The server determines whether there is a safety risk of executing the first control instruction by the first device within the first duration.

In this embodiment of this application, the server can determine whether there is a safety risk of executing the first control instruction by the first device within the first duration. This helps improve accuracy of fault detection of the first device.

In some possible implementations, that the server determines whether there is a safety risk of executing the first control instruction by the first device within the first duration includes: The server determines whether there is a safety risk of executing the first control instruction by the first device within the first duration starting from a time point at which the vehicle sends the first control instruction to the server.

In some possible implementations, that the server determines whether there is a safety risk of executing the first control instruction by the first device within the first duration includes: The server determines whether there is a safety risk of executing the first control instruction by the first device within the first duration starting from a time point at which the server receives the first control instruction.

Optionally, the first duration may be preset, or may be obtained by the server from another device (for example, the first device or another server).

Optionally, the first duration may be determined by the server based on a working scenario of the first device. For example, the first device is a vehicle. If the server determines that a scenario in which the vehicle currently travels is an urban road, the server may determine a value of the first duration as a first value. Alternatively, if the server determines that a scenario in which the vehicle currently travels is a highway, the server may determine a value of the first duration as a second value.

Optionally, the first duration is determined based on a communication delay between the first device and the server and the speed of the first device.

In this embodiment of this application, the first duration may be determined based on a communication delay between the server and the vehicle and a vehicle speed. In this way, the server can determine whether there is a safety risk of executing the first control instruction by the first device within the first duration. For example, the first device is a vehicle. The server can ensure driving safety of the vehicle within the first duration.

Optionally, the first duration may be determined based on a communication delay between the first device and a first server, a computing delay generated when the server processes data, and the speed of the first device.

Optionally, the method further includes: The server obtains a control instruction set. The control instruction set is determined by the first device based on the first control instruction and the first duration. The server determines, based on the data collected by the sensor, whether there is a safety risk of executing a control instruction in the control instruction set by the first device within the first duration. The safety information further includes second indication information, and the second indication information indicates whether there is a safety risk of executing the control instruction in the control instruction set by the first device within the first duration.

In this embodiment of this application, the first device may report the control instruction set to the server in addition to the first control instruction. The control instruction set may be a set of a plurality of control instructions that are considered safe by the vehicle. The server determines whether there is a safety risk of executing each control instruction in the control instruction set, to help the first device predict a fault (or a potential functional safety risk) that may occur on the first device. This helps reduce a risk that an accident occurs due to the fault of the first device.

For example, the first device is a vehicle. The server may help the vehicle predict a fault that is about to occur on an autonomous driving computing platform of the vehicle. In this way, the server can timely detect a dangerous state of the vehicle, and detect the potential functional safety risk before the fault of the autonomous driving computing platform causes a violation of a functional safety objective.

Optionally, that the server determines, based on the data collected by the sensor, whether there is a safety risk of executing the first control instruction by the first device includes: The server determines, based on the data collected by the sensor and first information, whether there is a safety risk of executing the first control instruction by the first device. The first information includes one or more of information about another device, road condition information, and map information.

In this embodiment of this application, the server can determine, based on the data uploaded by the first device and collected by the sensor, data uploaded by the another device, the road condition information, the map information, and the like, whether there is a safety risk of executing the first vehicle control instruction by the first device. A computing capability of the server is stronger than that of the first device, and the server stores more data and information than the first device. This helps improve accuracy of fault detection performed by the server on the first device.

S1103: The server sends the safety information to the first device. The safety information includes first indication information, and the first indication information indicates whether there is a safety risk of executing the first control instruction by the first device.

Optionally, if the first indication information indicates that there is no safety risk of executing the first control instruction by the first device, and the second indication information indicates that there is a safety risk of executing at least some control instructions in the control instruction set by the first device within the first duration, the safety information further includes another control instruction set. The another control instruction set is determined by the server based on the data and the first duration.

Optionally, the method further includes: The first device controls, based on the another control instruction set, the first device to work. For example, the first device is a vehicle. The vehicle may control, based on the another control instruction set, the vehicle to travel.

Optionally, for example, the first device is a vehicle. The method further includes: The vehicle may control the autonomous driving computing platform to perform function degradation.

Optionally, the method further includes: The first device prompts a user to take over the first device.

In this embodiment of this application, when determining that there is a safety risk of executing the at least some control instructions in the control instruction set by the first device, the server can include information about the another control instruction set in the safety information sent to the vehicle. In this way, the vehicle can travel based on the another control instruction set obtained by the server through calculation. This helps ensure driving safety of the vehicle.

Optionally, if the first indication information indicates that there is a safety risk of executing the first control instruction by the first device, the safety information further includes third indication information. The third indication information indicates the first device to stop working.

Optionally, the first device may stop working based on the third indication information. For example, the first device is a vehicle. The first device may stop travelling based on the third indication information.

In this embodiment of this application, when determining that there is a safety risk of executing the first control instruction by the first device, the server can include the third indication information in the safety information sent to the vehicle, to indicate the first device to stop working. This helps avoid an accident. For example, the first device is a vehicle. The third indication information may indicate the vehicle to perform an emergency stop, to help avoid the accident.

Optionally, the server may alternatively include the third indication information in the safety information, and explicitly indicate, based on the third indication information, the first device to stop working (for example, indicate the vehicle to stop travelling). Alternatively, the server may not include the third indication information in the safety information, and the server may implicitly indicate, based on the first indication information, the first device to stop working. Optionally, the first device may stop working based on the first indication information. For example, the first device is a vehicle. The first device may stop travelling based on the first indication information.

In this embodiment of this application, the first device can upload the data collected by the sensor and the first control instruction that is considered safe by the first device to the server, and the server determines, based on the data collected by the sensor, whether there is a safety risk of executing the first control instruction. This helps reduce hardware costs of the first device (for example, the first device is a vehicle, and hardware costs of autonomous driving can be reduced), to reduce computational overheads and power consumption generated when the first device performs fault detection. In addition, the computing capability of the server is stronger than that of the first device. This helps improve accuracy of fault detection of the first device.

FIG. 12 is a schematic block diagram of a fault detection apparatus 1200 according to an embodiment of this application. As shown in FIG. 12, the apparatus 1200 includes an obtaining unit 1201, configured to obtain data collected by a sensor of a first device and a first control instruction; a determining unit 1202, configured to determine, based on the data collected by the sensor, whether there is a safety risk of executing the first control instruction by the first device; and a sending unit 1203, configured to send safety information to the first device. The safety information includes first indication information, and the first indication information indicates whether there is a safety risk of executing the first control instruction by the first device.

Optionally, the obtaining unit 1201 is further configured to obtain information about first duration before the determining unit 1202 determines whether there is a safety risk of executing the first control instruction by the first device. The determining unit 1202 is specifically configured to determine whether there is a safety risk of executing the first control instruction by the first device within the first duration.

Optionally, the first duration is determined based on a communication delay between the first device and the apparatus and a speed of the first device.

Optionally, the obtaining unit 1201 is further configured to obtain a control instruction set. The control instruction set is determined by the first device based on the first control instruction and the first duration. The determining unit 1202 is further configured to determine, based on the data collected by the sensor, whether there is a safety risk of executing a control instruction in the control instruction set by the first device within the first duration. The safety information further includes second indication information, and the second indication information indicates whether there is a safety risk of executing the control instruction in the control instruction set by the first device within the first duration.

Optionally, if the first indication information indicates that there is no safety risk of executing the first control instruction by the first device, and the second indication information indicates that there is a safety risk of executing at least some control instructions in the control instruction set by the first device within the first duration, the safety information further includes another control instruction set. The another control instruction set is determined by the apparatus based on the data and the first duration.

Optionally, if the first indication information indicates that there is a safety risk of executing the first control instruction by the first device, the safety information further includes third indication information. The third indication information indicates the first device to stop working.

Optionally, the determining unit 1202 is specifically configured to determine, based on the data collected by the sensor and first information, whether there is a safety risk of executing the first control instruction by the first device. The first information includes one or more of information about another device, road condition information, and map information.

Optionally, the first control instruction includes one or more of the speed, a longitudinal acceleration, and a steering angle that are of the first device.

Optionally, the apparatus 1200 may be located in a cloud server.

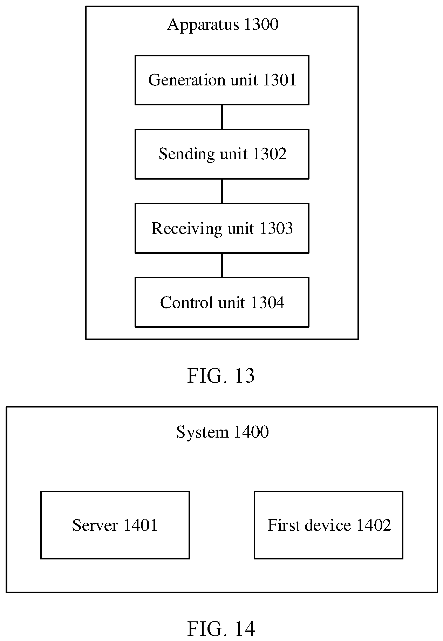

FIG. 13 is another schematic block diagram of a fault detection apparatus 1300 according to an embodiment of this application. As shown in FIG. 13, the apparatus 1300 includes a generation unit 1301, configured to generate a first control instruction based on data collected by a sensor; a sending unit 1302, configured to send the first control instruction and the data collected by the sensor; and a receiving unit 1303, configured to receive safety information determined by a server based on the data collected by the sensor. The safety information includes first indication information, and the first indication information indicates whether there is a safety risk of executing the first control instruction by the apparatus.

Optionally, the first indication information indicates whether there is a safety risk of executing the first control instruction by the apparatus within first duration.

Optionally, the first duration is determined based on a communication delay between the apparatus and the server and a speed of the apparatus.

Optionally, the sending unit 1302 is further configured to send a control instruction set to the server. The control instruction set is determined by the apparatus based on the first control instruction and the first duration. The safety information further includes second indication information, and the second indication information indicates whether there is a safety risk of executing a control instruction in the control instruction set by the apparatus within the first duration.

Optionally, the apparatus further includes a control unit. The control unit 1304 is configured to: if the first indication information indicates that there is a safety risk of executing the first control instruction by the apparatus, control the apparatus to stop working.

Optionally, if the first indication information indicates that there is no safety risk of executing the first control instruction by the apparatus, and the second indication information indicates that there is a safety risk of executing at least some control instructions in the control instruction set by the apparatus within the first duration, the safety information further includes another control instruction set. The another control instruction set is determined by the server based on the data and the first duration. The apparatus further includes the control unit. The control unit 1304 is configured to control, based on the another control instruction set, the apparatus to work.

Optionally, the control unit 1304 is further configured to control an autonomous driving computing platform to perform function degradation.

Optionally, the apparatus further includes a prompting unit, and the prompting unit is configured to prompt a user to take over the apparatus.

Optionally, the first control instruction includes one or more of the speed, a longitudinal acceleration, and a steering angle that are of the apparatus.

Optionally, the apparatus 1300 may be located in the foregoing first device.

An embodiment of this application further provides an apparatus. The apparatus includes a processing unit and a storage unit. The storage unit is configured to store instructions. The processing unit executes the instructions stored in the storage unit, so that the apparatus performs the steps performed by the server in the foregoing embodiment. Alternatively, the processing unit executes the instruction stored in the storage unit, so that the apparatus performs the steps performed by the vehicle in the foregoing embodiment.

Optionally, if the apparatus is located in a vehicle, the processing unit may be the processor 151 shown in FIG. 1, and the storage unit may be the memory 152 shown in FIG. 1. The memory 152 may be a storage unit (for example, a register or a cache) in a chip or a storage unit (for example, a read-only memory or a random access memory) that is in the vehicle and that is located outside the chip.

An embodiment of this application further provides a computer program product. The computer program product includes computer program code. When the computer program code is run on a computer, the computer is enabled to perform the method performed by the server or the first device.

An embodiment of this application further provides a server. The server may include the apparatus 1200.

An embodiment of this application further provides a vehicle. The vehicle may include the apparatus 1300.

An embodiment of this application further provides a vehicle control apparatus. The vehicle control apparatus may include the apparatus 1200. The vehicle control apparatus may be presented in a plurality of different product forms. For example, the vehicle control apparatus may be a server. The server may be a single server, or may be a server cluster including a plurality of servers. The server may be a local server. In an Internet of vehicles field, the server may be specifically a cloud server that may also be referred to as a cloud, a cloud server, a cloud controller, an Internet of vehicles server, or the like. The cloud server is a general term of devices or components that have a data processing capability. For example, the cloud server may include an entity device like a host or a processor, may include a virtual device like a virtual machine or a container, and may include a chip or an integrated circuit. Optionally, the vehicle control apparatus may alternatively be a road side unit (road side unit, RSU), or a chip or component in the road side unit.

FIG. 14 is a schematic block diagram of a system 1400 according to an embodiment of this application. As shown in FIG. 14, the system 1400 may include a server 1401 and a first device 1402. The server 1401 may be the server in the foregoing embodiment, and the first device 1402 may be the first device in the foregoing embodiment. For example, the first device may be the vehicle in the foregoing embodiment.

An embodiment of this application further provides a computer-readable medium. The computer-readable medium stores program code. When the computer program code is run on a computer, the computer is enabled to perform the foregoing method.

In an implementation process, steps in the foregoing methods can be completed by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein again.

It should be understood that the processor in embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general purpose processor may be a microprocessor, or the processor may be any conventional processor or the like.

It should also be understood that, in embodiments of this application, the memory may include a read-only memory and a random access memory, and provide instructions and data to the processor.

In embodiments of this application, "first", "second", and various numeric numbers are merely used for distinguishing for ease of description and are not intended to limit the scope of embodiments of this application. For example, "first", "second", and various numeric numbers are used for distinguishing between different pipes, through holes, and the like.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A fault detection method, comprising:

   obtaining, by a server, data collected by a sensor of a first device and a first control instruction;
   determining, by the server based on the data collected by the sensor, whether there is a safety risk of executing the first control instruction by the first device; and
   sending, by the server, safety information to the first device, wherein the safety information comprises first indication information, and the first indication information indicates whether there is a safety risk of executing the first control instruction by the first device.

2. The method according to claim 1, wherein before the determining whether there is a safety risk of executing the first control instruction by the first device, the method further comprises:

   obtaining, by the server, information about first duration; and
   the determining whether there is a safety risk of executing the first control instruction by the first device comprises:

determining, by the server, whether there is a safety risk of executing the first control instruction by the first device within the first duration.

3. The method according to claim 2, wherein the first duration is determined based on a communication delay between the first device and the server and a speed of the first device.

4. The method according to claim 2 or 3, wherein the method further comprises:

obtaining, by the server, a control instruction set, wherein the control instruction set is determined by the first device based on the first control instruction and the first duration; and
determining, by the server based on the data collected by the sensor, whether there is a safety risk of executing a control instruction in the control instruction set by the first device within the first duration, wherein
the safety information further comprises second indication information, and the second indication information indicates whether there is a safety risk of executing the control instruction in the control instruction set by the first device within the first duration.

5. The method according to claim 4, wherein if the first indication information indicates that there is no safety risk of executing the first control instruction by the first device, and the second indication information indicates that there is a safety risk of executing at least some control instructions in the control instruction set by the first device within the first duration, the safety information further comprises another control instruction set, and the another control instruction set is determined by the server based on the data and the first duration.

6. The method according to any one of claims 1 to 4, wherein if the first indication information indicates that there is a safety risk of executing the first control instruction by the first device, the safety information further comprises third indication information, and the third indication information indicates the first device to stop working.

7. The method according to any one of claims 1 to 6, wherein the determining, by the server based on the data collected by the sensor, whether there is a safety risk of executing the first control instruction by the first device comprises:
determining, by the server based on the data collected by the sensor and first information, whether there is a safety risk of executing the first control instruction by the first device, wherein the first information comprises one or more of information about another device, road condition information, and map information.

8. The method according to any one of claims 1 to 7, wherein the first control instruction comprises one or more of the speed, a longitudinal acceleration, and a steering angle that are of the first device.

9. A fault detection method, comprising:

sending, by a first device, data collected by a sensor of the first device and a first control instruction to a server; and
receiving, by the first device, safety information determined by the server based on the data collected by the sensor, wherein the safety information comprises first indication information, and the first indication information indicates whether there is a safety risk of executing the first control instruction by the first device.

10. The method according to claim 9, wherein the first indication information indicates whether there is a safety risk of executing the first control instruction by the device within first duration.

11. The method according to claim 10, wherein the first duration is determined based on a communication delay between the first device and the server and a speed of the first device.

12. The method according to claim 10 or 11, wherein the method further comprises:

sending, by the first device, a control instruction set to the server, wherein the control instruction set is determined by the first device based on the first control instruction and the first duration; and
the safety information further comprises second indication information, and the second indication information indicates whether there is a safety risk of executing a control instruction in the control instruction set by the first device within the first duration.

13. The method according to any one of claims 9 to 12, wherein the method further comprises:
if the first indication information indicates that there is a safety risk of executing the first control instruction by the first device, stopping, by the first device, working.

14. The method according to claim 12, wherein if the first indication information indicates that there is no safety risk of executing the first control instruction by the first device, and the second indication information indicates that there is a safety risk of executing at least some control instructions in the control instruction set by the first device within the first duration, the safety information further comprises another control instruction set, and the another control instruction set is determined by the server based on the data and the first duration; and the method further comprises:
controlling, by the first device based on the another control instruction set, the first device to work.

15. The method according to claim 14, wherein the method further comprises:
controlling, by the first device, an autonomous driving computing platform to perform function degradation.

16. The method according to claim 14 or 15, wherein the method further comprises:
prompting, by the first device, a user to take over the first device.

17. The method according to any one of claims 9 to 16, wherein the first control instruction comprises one or more of the speed, a longitudinal acceleration, and a steering angle that are of the first device.

18. A fault detection apparatus, comprising:

an obtaining unit, configured to obtain data collected by a sensor of a first device and a first control instruction;
a determining unit, configured to determine, based on the data collected by the sensor, whether there is a safety risk of executing the first control instruction by the first device; and
a sending unit, configured to send safety information to the first device, wherein the safety information comprises first indication information, and the first indication information indicates whether there is a safety risk of executing the first control instruction by the first device.

19. The apparatus according to claim 18, wherein the obtaining unit is further configured to obtain information about first duration before the determining unit determines whether there is a safety risk of executing the first control instruction by the first device; and
the determining unit is specifically configured to determine whether there is a safety risk of executing the first control instruction by the first device within the first duration.

20. The apparatus according to claim 19, wherein the first duration is determined based on a communication delay between the first device and the apparatus and a speed of the first device.

21. The apparatus according to claim 19 or 20, wherein the obtaining unit is further configured to obtain a control instruction set, wherein the control instruction set is determined by the first device based on the first control instruction and the first duration;

the determining unit is further configured to determine, based on the data collected by the sensor, whether there is a safety risk of executing a control instruction in the control instruction set by the first device within the first duration; and the safety information further comprises second indication information, and the second indication information indicates whether there is a safety risk of executing the control instruction in the control instruction set by the first device within the first duration.

22. The apparatus according to claim 21, wherein if the first indication information indicates that there is no safety risk of executing the first control instruction by the first device, and the second indication information indicates that there is a safety risk of executing at least some control instructions in the control instruction set by the first device within the first duration, the safety information further comprises another control instruction set, and the another control instruction set is determined by the apparatus based on the data and the first duration.

23. The apparatus according to any one of claims 18 to 21, wherein if the first indication information indicates that there is a safety risk of executing the first control instruction by the first device, the safety information further comprises third indication information, and the third indication information indicates the first device to stop working.

24. The apparatus according to any one of claims 18 to 23, wherein the determining unit is specifically configured to determine, based on the data collected by the sensor and first information, whether there is a safety risk of executing the first control instruction by the first device, wherein the first information comprises one or more of information about another device, road condition information, and map information.

25. The apparatus according to any one of claims 18 to 24, wherein the first control instruction comprises one or more of the speed, a longitudinal acceleration, and a steering angle that are of the first device.

26. A fault detection apparatus, comprising:

a generation unit, configured to generate a first control instruction based on data collected by a sensor;

a sending unit, configured to send the first control instruction and the data collected by the sensor; and

a receiving unit, configured to receive safety information determined by a server based on the data collected by the sensor, wherein the safety information comprises first indication information, and the first indication information indicates whether there is a safety risk of executing the first control instruction by the apparatus.

27. The apparatus according to claim 26, wherein the first indication information indicates whether there is a safety risk of executing the first control instruction by the apparatus within first duration.

28. The apparatus according to claim 27, wherein the first duration is determined based on a communication delay between the apparatus and the server and a speed of the apparatus.

29. The apparatus according to claim 27 or 28, wherein the sending unit is further configured to send a control instruction set to the server, wherein the control instruction set is determined by the apparatus based on the first control instruction and the first duration; and

the safety information further comprises second indication information, and the second indication information indicates whether there is a safety risk of executing a control instruction in the control instruction set by the apparatus within the first duration.

30. The apparatus according to any one of claims 26 to 29, wherein the apparatus further comprises a control unit; and

the control unit is configured to: if the first indication information indicates that there is a safety risk of executing the first control instruction by the apparatus, control the apparatus to stop working.

31. The apparatus according to claim 29, wherein if the first indication information indicates that there is no safety risk of executing the first control instruction by the apparatus, and the second indication information indicates that there is a safety risk of executing at least some control instructions in the control instruction set by the apparatus within the first duration, the safety information further comprises another control instruction set, wherein the another control instruction set is determined by the server based on the data and the first duration; and the apparatus further comprises a control unit; and

the control unit is configured to control, based on the another control instruction set, the apparatus to work.

32. The apparatus according to claim 31, wherein the control unit is further configured to control an autonomous driving computing platform to perform function degradation.

33. The apparatus according to claim 31 or 32, wherein the apparatus further comprises a prompting unit; and

the prompting unit is configured to prompt a user to take over the apparatus.

34. The apparatus according to any one of claims 26 to 33, wherein the first control instruction comprises one or more of the speed, a longitudinal acceleration, and a steering angle that are of the apparatus.

35. A server, comprising the apparatus according to any one of claims 18 to 25.

36. A vehicle, comprising the apparatus according to any one of claims 26 to 34.

37. A system, wherein the system comprises a server and a vehicle, the server is the server according to claim 35, and/or the vehicle is the vehicle according to claim 36.

38. A computer-readable storage medium, wherein the computer-readable medium stores program code, and when the program code is run on a computer, the computer is enabled to perform the method according to any one of claims 1 to 8; or

when the program code is run on a computer, the computer is enabled to perform the method according to any one of claims 9 to 17.

FIG. 1

FIG. 2

Information about
another vehicle and road
condition information

Data output by a
vehicle sensor

Vehicle control
information

Other vehicle
information

Cloud server

Safety
information

FIG. 3

FIG. 4A

CONT.
FROM
FIG. 4A

CONT.
FROM
FIG. 4A

Autonomous
driving risk level:
high

There is no safety
risk of executing
the current
vehicle control
instruction
and there is a
safety risk of
executing at least
some vehicle
control
instructions in the
vehicle control
instruction set

There is no safety
risk of executing
the current
vehicle control
instruction
and there is no
safety risk of
executing the
vehicle control
instruction in the
vehicle control
instruction set

Autonomous
driving risk level:
medium

Normal
autonomous
driving

Cloud server

Send safety information
to the vehicle

FIG. 4B

A vehicle control instruction $C_x$ may be
within a range of $A_1$ and within a range of $A_2$

The vehicle control instruction $C_x$ issued by a vehicle
within $t_1 + t_{E2E\_safety}$ may be within the range of $A_2$

The vehicle control instruction $C_x$ issued by the vehicle
within $t_0 + t_{E2E\_safety}$ may be within the range of $A_1$

Time

Issued at a moment $t_0$:
Vehicle control instruction $C_1$
Vehicle control instruction set
$A_1$

Issued at a moment $t_2 = t_0 + 2t_c$:
Vehicle control instruction $C_3$
Vehicle control instruction set $A_3$

Issued at a moment $t_1 = t_0 + t_c$:
Vehicle control instruction $C_2$
Vehicle control instruction set $A_2$

Issued at a moment $t_3 = t_0 + 3t_c$:
Vehicle control instruction $C_4$
Vehicle control instruction set $A_4$

FIG. 5

Longitudinal acceleration a

$\Delta\alpha_{MAX\_negative}$     $\Delta\alpha_{MAX\_positive}$

$\Delta a_{MAX\_positive}$

(a_now, α_now)

$\Delta a_{MAX\_negative}$

Steering angle α

FIG. 6

FIG. 7

Longitudinal acceleration a

$\Delta\alpha_{MAX\_negative}$        $\Delta\alpha_{MAX\_positive}$

$\Delta a_{MAX\_positive}$

$\bullet$ (a_now, α_now)

$\Delta a_{MAX\_negative}$

Steering angle α

FIG. 8

Data collected
by a sensor

Safety
information

Vehicle control
instruction set
issued by an
autonomous
driving computing
platform

Real-time vehicle
control instruction
issued by the
autonomous
driving computing
platform

Determine
whether a fault
threatening functional
safety occurs on the
autonomous driving
computing
platform

No

901

Yes

Determine whether
a risk level is medium

Yes

902

No

Replace the vehicle
control instruction
set with another
vehicle control
instruction set
recommended by a
cloud server

Yes

Is the
real-time vehicle
control instruction within
a range of the another
vehicle control
instruction
set?

903

No

TO
FIG. 9B

TO
FIG. 9B

FIG. 9A

CONT.
FROM
FIG. 9A

CONT.
FROM
FIG. 9A

Does the autonomous driving computing platform have a function degradation capability?

No

904

Yes

Notify the autonomous driving computing platform to perform function degradation

905

Indicate a VCU to control a vehicle to stop travelling

906

In-vehicle safety module

FIG. 9B

Vehicle control
information

Data collected by
a vehicle sensor

Information about
another vehicle or road
condition information

Environment
information

Road condition and
environment data

Update the
environment
information

Sensing and fusion

Calculate whether there is a safety risk of
executing a current vehicle control instruction by
a vehicle within a safety delay

Calculate
whether there is
a safety risk of
executing the current
vehicle control
instruction

Autonomous driving
risk level: high

There is no safety
risk of executing the
current vehicle
control instruction

Cloud server

Send safety information to the vehicle

FIG. 10

1100

| First device | | Server |

S1101: Data collected by a sensor and first control instruction

S1102: Determine, based on the data collected by the sensor, whether there is a safety risk of executing the first control instruction by the first device

S1103: Safety information

FIG. 11

Apparatus 1200

Obtaining unit 1201

Determining unit 1202

Sending unit 1203

FIG. 12

Apparatus 1300

Generation unit 1301

Sending unit 1302

Receiving unit 1303

Control unit 1304

FIG. 13

System 1400

Server 1401

First device 1402

FIG. 14

## INTERNATIONAL SEARCH REPORT

| International application No. |
|---|
| **PCT/CN2021/109640** |

**A.    CLASSIFICATION OF SUBJECT MATTER**

G05D 1/02(2020.01)i;  B60W 60/00(2020.01)i

According to International Patent Classification (IPC) or to both national classification and IPC

**B.    FIELDS SEARCHED**

Minimum documentation searched (classification system followed by classification symbols)

G05D; B60W

Documentation searched other than minimum documentation to the extent that such documents are included in the fields searched

Electronic data base consulted during the international search (name of data base and, where practicable, search terms used)

CNABS, CNTXT, CNKI, VEN: 自动驾驶, 无人驾驶, 指令, 命令, 策略, 决策, 决定, 正确, 准确, 故障, 安全, 服务器, 云, AUTOMATIC, UNMANNED, COMMAND, DECISION, INSTRUCTION, CORRECT, SAFE, FAULT, SERVER

**C.    DOCUMENTS CONSIDERED TO BE RELEVANT**

| Category* | Citation of document, with indication, where appropriate, of the relevant passages | Relevant to claim No. |
|---|---|---|
| X | CN 109709965 A (UISEE TECHNOLOGIES BEIJING CO., LTD.) 03 May 2019 (2019-05-03)<br> description, paragraphs 46-153, and figures 1-7 | 1-38 |
| X | CN 110262469 A (JIANGSU CHANGFA AGRICULTURAL EQUIPMENT CO., LTD.) 20 September 2019 (2019-09-20)<br> description, paragraphs 74-169, and figures 1-3 | 1-38 |
| A | CN 111061268 A (GREAT WALL MOTOR CO., LTD.) 24 April 2020 (2020-04-24)<br> entire document | 1-38 |
| A | CN 111291356 A (OPPO GUANGDONG MOBILE TELECOMMUNICATIONS CO., LTD.) 16 June 2020 (2020-06-16)<br> entire document | 1-38 |
| A | CN 108011912 A (BEIJING CHEHEJIA INFORMATION TECHNOLOGY CO., LTD.) 08 May 2018 (2018-05-08)<br> entire document | 1-38 |
| A | CN 109017756 A (ZHOU JIAO) 18 December 2018 (2018-12-18)<br> entire document | 1-38 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 April 2022** | **26 April 2022** |

| Name and mailing address of the ISA/CN | Authorized officer |
|---|---|
| **China National Intellectual Property Administration (ISA/ CN)**<br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/109640** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108549384 A (JINAN INSPUR HI-TECH INVESTMENT AND DEVELOPMENT CO., LTD.) 18 September 2018 (2018-09-18)<br>entire document | 1-38 |
| A | WO 2019125269 A1 (SCANIA CV AB.) 27 June 2019 (2019-06-27)<br>entire document | 1-38 |
| A | US 9478132 B1 (THUNDER POWER HONG KONG LTD.) 25 October 2016 (2016-10-25)<br>entire document | 1-38 |
| A | WO 2018048870 A1 (ALLSTATE INSURANCE CO.) 15 March 2018 (2018-03-15)<br>entire document | 1-38 |

Form PCT/ISA/210 (second sheet) (January 2015)

**INTERNATIONAL SEARCH REPORT**
Information on patent family members

International application No.

**PCT/CN2021/109640**

| Patent document cited in search report | | | Publication date (day/month/year) | Patent family member(s) | | | Publication date (day/month/year) |
|---|---|---|---|---|---|---|---|
| CN | 109709965 | A | 03 May 2019 | WO | 2020133208 | A1 | 02 July 2020 |
| CN | 110262469 | A | 20 September 2019 | | None | | |
| CN | 111061268 | A | 24 April 2020 | | None | | |
| CN | 111291356 | A | 16 June 2020 | | None | | |
| CN | 108011912 | A | 08 May 2018 | CN | 108011912 | B | 30 October 2020 |
| CN | 109017756 | A | 18 December 2018 | | None | | |
| CN | 108549384 | A | 18 September 2018 | | None | | |
| WO | 2019125269 | A1 | 27 June 2019 | SE | 1751581 | A1 | 21 June 2019 |
| | | | | DE | 112018005796 | T5 | 13 August 2020 |
| | | | | SE | 541390 | C2 | 10 September 2019 |
| US | 9478132 | B1 | 25 October 2016 | EP | 3188153 | A1 | 05 July 2017 |
| | | | | EP | 3188153 | A2 | 05 July 2017 |
| | | | | EP | 3188153 | A3 | 15 November 2017 |
| | | | | HK | 1240686 | A0 | 25 May 2018 |
| | | | | HK | 1242660 | A0 | 29 June 2018 |
| WO | 2018048870 | A1 | 15 March 2018 | US | 2016379310 | A1 | 29 December 2016 |
| | | | | US | 10846799 | B2 | 24 November 2020 |

Form PCT/ISA/210 (patent family annex) (January 2015)